(19) Europäisches Patentamt
European Patent Office
Office européen des brevets

(11) EP 4 506 371 A1

(12) EUROPEAN PATENT APPLICATION
published in accordance with Art. 153(4) EPC

(43) Date of publication:
**12.02.2025 Bulletin 2025/07**

(21) Application number: **23775091.4**

(22) Date of filing: **24.03.2023**

(51) International Patent Classification (IPC):
***C08F 8/42*** *(2006.01)*

(52) Cooperative Patent Classification (CPC):
**C08F 8/42; C08F 220/04; C08F 222/00**

(86) International application number:
**PCT/JP2023/011827**

(87) International publication number:
**WO 2023/182498 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.03.2022 JP 2022048532**

(71) Applicant: **Japan Polyethylene Corporation**
**Tokyo 100-8251 (JP)**

(72) Inventors:
- **UEMATSU Masahiro**
  **Kawasaki-shi, Kanagawa 210-8548 (JP)**
- **KOTO Yuma**
  **Kawasaki-shi, Kanagawa 210-8548 (JP)**

(74) Representative: **Müller-Boré & Partner Patentanwälte PartG mbB**
**Friedenheimer Brücke 21**
**80639 München (DE)**

# (54) IONOMER CONTAINING METAL OF GROUP 2 OF PERIODIC TABLE

(57) An ionomer includes a neutralization product of a copolymer (P) including, as essential constituent units, structural units (A) derived from ethylene and/or a C3-C20 α-olefin and structural units (B) derived from a monomer having a carboxyl group and/or a dicarboxylic acid anhydride group, the proportion of the structural units (B) being 1 to 20 mol%, the ionomer being such that at least part of the carboxyl groups and/or the dicarboxylic acid anhydride groups in the copolymer (P) are converted to a metal-containing carboxylate salt containing a metal ion of at least one metal selected from Group 2 of the periodic table, the ionomer having (a) a phase angle δ of 50 degrees to 75 degrees when the absolute value G* of complex elastic modulus measured with a rotational rheometer is 0.1 MPa, and (b) a degree of neutralization of 1 to 90 mol%. The ionomer is well balanced among fluidity, impact resistance, and adhesion to highly polar dissimilar materials.

EP 4 506 371 A1

## Description

### Technical Field

The present invention relates to an ionomer, and more particularly to an ionomer containing a Group 2 metal in the periodic table that is well balanced among fluidity, impact resistance, and adhesion.

### Background Art

Ethylene-based ionomers are resins that are based on an ethylene-unsaturated carboxylic acid copolymer and are intermolecularly bonded through metal ions, such as sodium or zinc. These resins are very tough and rigid and have high transparency (Patent Literature 1).

Known ethylene-based ionomers that are currently available in the market include "SURLYN (registered trademark)", sodium or zinc salts of ethylene-methacrylic acid copolymers developed by DuPont, and "HIMILAN (registered trademark)" sold by DOW-MITSUI POLYCHEMICALS CO., LTD.

In these ethylene-based ionomers currently available in the market, the base resins, namely, the ethylene-unsaturated carboxylic acid copolymers are polar group-containing olefin copolymers obtained by high-pressure radical polymerization of ethylene and a polar group-containing monomer, such as an unsaturated carboxylic acid. As illustrated in the image in Fig. 1, the molecular structure of these polar group-containing olefin copolymers produced by high-pressure radical polymerization has many long-chain branches and short-chain branches irregularly. Due to this structure, the ionomers are insufficient in strength and impact resistance.

Other methods have been reported for the production of polar group-containing olefin copolymers that serve as base resins of ethylene-based ionomers. Specifically, ethylene and t-butyl acrylate are copolymerized using a late transition metal catalyst, and the resultant polar group-containing olefin copolymer is heat- or acid-treated and thereby modified into an ethylene-acrylic acid copolymer, which is then reacted with metal ions, such as sodium or zinc, to form an ethylene-based ionomer (Patent Literature 2, Patent Literature 3).

Ionomers containing magnesium as metal ions have been also reported. Specifically, an ethylene-cyclic olefin copolymer (COC) is graft-modified with maleic anhydride and is subsequently reacted with magnesium stearate to form an ethylene-based ionomer (Patent Literature 4).

### Citation List

#### Patent Literature

Patent Literature 1: U.S. Patent No. 3264272
Patent Literature 2: Japanese Patent Application Kokai Publication No. 2016-079408
Patent Literature 3: Japanese Patent Application Kokai Publication No. 2020-143276
Patent Literature 4: Japanese Patent Application Kokai Publication No. 2020-158682

### Summary of Invention

#### Technical Problem

In Patent Literature 2, the polar group-containing olefin copolymer as the base resin is produced using a late transition metal catalyst and has a substantially linear structure. Thus, the ionomer that is obtained excels in, for example, thermal properties and mechanical strength. However, the ionomers that are studied are substantially sodium ionomers alone, and whether or how other metal ions will affect properties is not described.

Furthermore, Patent Literature 2 does not describe that the ionomers have excellent bonding performance with respect to highly polar dissimilar materials, such as synthetic resins excluding polyolefins, metals, and wood.

In Patent Literature 3, a ternary ionomer is obtained that includes as a base resin a polar group-containing olefin copolymer which is produced using a late transition metal catalyst and has a substantially linear structure. It is described that the ionomer is excellent in tensile strength, transparency, and adhesion to metals. However, the consideration is substantially limited to sodium ionomers and zinc ionomers, and whether or how other metal ions will affect properties is not described.

Furthermore, Patent Literature 3 does not address high balance among fluidity, impact resistance, and adhesion. Furthermore, production costs are increased by the use of the monomer other than ethylene and a monomer having a

carboxyl group and/or a dicarboxylic acid anhydride group.

In Patent Literature 4, a magnesium ionomer is obtained that includes a maleic anhydride-grafted product of an ethylene-cyclic olefin copolymer (COC) as the base resin. It is described that the ionomer excels in high-temperature dimensional stability and transparency.

It is, however, extremely difficult to introduce a large amount of maleic anhydride into the copolymer by graft modification. Thus, the acid content in the copolymer is disadvantageously low. The content of maleic anhydride in the copolymer actually described in Examples of Patent Literature 4 is about 1.5 wt% (0.86 mol%). Thus, the ethylene-based ionomer based on the graft-modified copolymer is poor in adhesion due to the small number of polar sites in the copolymer.

Furthermore, because the sites for reaction with metal ions are scarce, the ethylene-based ionomer will not exhibit sufficient impact resistance expected as an ionomer.

Furthermore, the base resin, of the ethylene-based ionomer, used in Examples of Patent Literature 4 contains as much as 21 mol% of a cyclic olefin, and consequently has a high glass transition temperature (Tg) and is excessively hard.

In view of the circumstances in the related art discussed above, it is an object of the present invention to provide an ionomer well balanced among fluidity, impact resistance, and adhesion to highly polar dissimilar materials.

## Solution to Problem

In order to solve the above problems, the present inventors have found that a specific ionomer that is neutralized with an ion of a Group 2 metal in the periodic table and has a linear structure giving a phase angle $\delta$ of 50 degrees to 75 degrees when the absolute value G* of complex elastic modulus measured with a rotational rheometer is 0.1 MPa excels in fluidity, impact resistance, and adhesion to highly polar dissimilar materials over ionomers neutralized with ions of metals from other Groups. The present invention has been completed based on the finding.

Specifically, an aspect of the present invention resides in an ionomer that comprises a neutralization product of a copolymer (P) comprising, as essential constituent units, structural units (A) derived from ethylene and/or a C3-C20 $\alpha$-olefin and structural units (B) derived from a monomer having a carboxyl group and/or a dicarboxylic acid anhydride group, the proportion of the structural units (B) being 1 to 20 mol%, the ionomer being such that at least part of the carboxyl groups and/or the dicarboxylic acid anhydride groups in the copolymer (P) are converted to a metal-containing carboxylate salt containing a metal ion of at least one metal selected from Group 2 of the periodic table, the ionomer having (a) a phase angle $\delta$ of 50 degrees to 75 degrees when the absolute value G* of complex elastic modulus measured with a rotational rheometer is 0.1 MPa, and (b) a degree of neutralization of 1 to 90 mol%.

In an embodiment of the present invention, a number of methyl branches calculated by $^{13}$C-NMR of the copolymer (P) in the ionomer is 50 or less per 1,000 carbon atoms.

In an embodiment of the present invention, the structural units (A) in the ionomer are structural units derived from ethylene.

In an embodiment of the present invention, the metal ion in the ionomer is at least one or more selected from the group consisting of $Mg^{2+}$ and $Ca^{2+}$.

In an embodiment of the present invention, the copolymer (P) is produced using a transition metal catalyst comprising a transition metal from Groups 8 to 11 of the periodic table. In an embodiment of the present invention, the transition metal catalyst in the ionomer is a transition metal catalyst including a phosphosulfonic acid or phosphophenol ligand and nickel or palladium.

## Advantageous Effects of Invention

The ionomer according to the present invention has a substantially linear structure neutralized with a metal from Group 2 of the periodic table and outperforms conventional hyperbranched ionomers or linear ionomers neutralized with a metal from other Groups in terms of the balance among fluidity, impact resistance, and adhesion.

## Brief Description of Drawings

[Fig. 1] Fig. 1 is an image of the molecular structure of a hyperbranched olefin copolymer produced by a high-pressure radical polymerization process.

[Fig. 2] Fig. 2 is an image of the molecular structure of a linear olefin copolymer produced using a metal catalyst.

[Fig. 3] Fig. 3 is a diagram illustrating relationships between MFR (fluidity) and tensile impact strength (impact resistance) of ionomers of Examples 1 to 3 and Comparative Examples 1 to 9.

[Fig. 4] Fig. 4 is a diagram illustrating relationships between MFR (fluidity) and aluminum bond strength (adhesion) of ionomers of Examples 1 to 3 and Comparative Examples 1 to 9.

Description of Embodiments

An ionomer of the present invention includes a neutralization product of a copolymer (P) including, as essential constituent units, structural units (A) derived from ethylene and/or a C3-C20 α-olefin and structural units (B) derived from a monomer having a carboxyl group and/or a dicarboxylic acid anhydride group, the proportion of the structural units (B) being 1 to 20 mol%, the ionomer being such that at least part of the carboxyl groups and/or the dicarboxylic acid anhydride groups in the copolymer (P) are converted to a metal-containing carboxylate salt containing a metal ion of at least one metal selected from Group 2 of the periodic table, the ionomer having the following characteristics (a) and (b):

(a) the phase angle δ is 50 degrees to 75 degrees when the absolute value G* of complex elastic modulus measured with a rotational rheometer is 0.1 MPa,
(b) the degree of neutralization is 1 to 90 mol%.

Hereinafter, features of the ionomer according to the present invention will be described in detail. As used herein, "(meth)acrylic acid" means acrylic acid or methacrylic acid. As used herein, "to" used in numerical ranges means that the numerical ranges include the numbers before and after the "to" as the lower limit and the upper limit. As used herein, copolymer means a binary or higher copolymer containing at least one kind of units (A) and at least one kind of units (B).
As used herein, ionomer means an ionomer of a binary or higher copolymer that includes the structural units (A) and structural units (B') resulting from the conversion of at least part of the structural units (B) into a metal-containing carboxylate salt, and that may further include the structural units (B).

1. Ionomers

The ionomer of the present invention is based on a copolymer (P) that is a substantially linear random copolymer including, as essential constituent units, structural units (A) derived from ethylene and/or a C3-C20 α-olefin and structural units (B) derived from a monomer having a carboxyl group and/or a dicarboxylic acid anhydride group, and is such that at least part of the carboxyl groups and/or the dicarboxylic acid anhydride groups in the structural units (B) are converted to a metal-containing carboxylate salt containing a metal ion of at least one metal selected from Group 2 of the periodic table.

(1) Structural units (A)

The structural units (A) are at least one kind of structural units selected from the group consisting of structural units derived from ethylene and structural units derived from a C3-C20 α-olefin.
The α-olefins according to the present invention are C3-C20 α-olefins represented by the structural formula: $CH_2=CHR^{18}$($R^{18}$ is a C1-C18 hydrocarbon group and may have a linear structure or branches). The number of carbon atoms in the α-olefins is preferably 3 to 12.
Specific examples of the monomers that give the structural units (A) include ethylene, propylene, 1-butene, 1-pentene, 1-hexene, 1-octene, 1-decene, 3-methyl-1-butene, and 4-methyl-1-pentene. The monomer may be ethylene. The ethylene that is used may be petroleum ethylene or non-petroleum ethylene, such as ethylene from plant raw materials.
The structural units (A) may be of a single kind or a plurality of kinds.
Exemplary two-component combinations include ethylene-propylene, ethylene-1-butene, ethylene-1-hexene, ethylene-1-octene, propylene-1-butene, propylene-1-hexene, and propylene-1-octene.
Exemplary three-component combinations include ethylene-propylene-1-butene, ethylene-propylene-1-hexene, ethylene-propylene-1-octene, propylene-1-butene-hexene, and propylene-1-butene-1-octene.
In the present invention, it is preferable that the structural units (A) essentially contain ethylene, and the units may further contain one or more C3-C20 α-olefins as required.
Ethylene in the structural units (A) may represent 50 to 100 mol%, 70 to 100 mol%, or 90 to 100 mol% of the total mol of the structural units (A).
From the point of view of impact resistance, the structural units (A) may be structural units derived from ethylene.

(2) Structural units (B)

The structural units (B) are structural units derived from a monomer having a carboxyl group and/or a dicarboxylic acid anhydride group. The structural units (B) have the same structure as structural units derived from a monomer having a carboxyl group and/or a dicarboxylic acid anhydride group and are not necessarily produced using a monomer having a carboxyl group and/or a dicarboxylic acid anhydride group, as will be described later in the section of production methods.
Examples of the monomers having a carboxyl group include unsaturated carboxylic acids, such as acrylic acid,

methacrylic acid, maleic acid, fumaric acid, tetrahydrophthalic acid, itaconic acid, citraconic acid, crotonic acid, isocrotonic acid, norbornenedicarboxylic acid, and bicyclo[2,2,1]hept-2-ene-5,6-dicarboxylic acid. Examples of the monomers having a dicarboxylic acid anhydride group include unsaturated dicarboxylic acid anhydrides, such as maleic anhydride, itaconic anhydride, citraconic anhydride, tetrahydrophthalic anhydride, 5-norbornene-2,3-dicarboxylic anhydride, 3,6-epoxy-1,2,3,6-tetrahydrophthalic anhydride, tetracyclo[6.2.1.1$^{3,6}$.0$^{2,7}$]dodec-9-ene-4,5-dicarboxylic anhydride, and 2,7-octadien-1-ylsuccinic anhydride.

From the point of view of industrial availability, the monomer having a carboxyl group and/or a dicarboxylic acid anhydride group may be preferably acrylic acid, methacrylic acid, or 5-norbornene-2,3-dicarboxylic anhydride, and, in particular, may be acrylic acid.

The monomers having a carboxyl group and/or a dicarboxylic acid anhydride group may be used singly, or a plurality thereof may be used in combination.

Some of the dicarboxylic acid anhydride groups may be ring-opened into dicarboxylic acid by reacting with moisture in the air. Ring-opening of the dicarboxylic acid anhydride groups may occur without deviation from the spirit of the present invention.

(3) Additional structural units (C)

The copolymer (P) according to the present invention may include structural units (C) other than the structural units (A) and the structural units (B). The monomer that gives the structural units (C) may be any monomer that does not belong to the monomers giving the structural units (A) and the structural units (B). The monomer that gives the structural units (C) is not limited as long as the compound has one or more carbon-carbon double bonds in the molecular structure. Examples include acyclic monomers represented by general formula (1) below and cyclic monomers represented by general formula (2) below.

·Acyclic monomers

[Chem. 1]

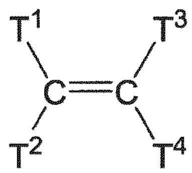

· · · (1)

[In general formula (1), $T^1$ to $T^3$ are each independently a substituent selected from the group consisting of hydrogen atom, C1-C20 hydrocarbon groups, C1-C20 hydrocarbon groups substituted with a hydroxyl group, C2-C20 hydrocarbon groups substituted with a C1-C20 alkoxy group, C3-C20 hydrocarbon groups substituted with a C2-C20 ester group, C1-C20 hydrocarbon groups substituted with a halogen atom, C1-C20 alkoxy groups, C6-C20 aryl groups, C2-C20 ester groups, C3-C20 silyl groups, halogen atoms, and cyano group; and

$T^4$ is a substituent selected from the group consisting of C1-C20 hydrocarbon groups substituted with a hydroxyl group, C2-C20 hydrocarbon groups substituted with a C1-C20 alkoxy group, C3-C20 hydrocarbon groups substituted with a C2-C20 ester group, C1-C20 hydrocarbon groups substituted with a halogen atom, C1-C20 alkoxy groups, C6-C20 aryl groups, C2-C20 ester groups, C3-C20 silyl groups, halogen atoms, and cyano group.]

The carbon skeletons contained in $T^1$ to $T^4$, namely, the hydrocarbon groups, the alkoxy substituents, the ester substituents, the alkoxy groups, the aryl groups, the ester groups, and the silyl groups may have a branch, a ring, and/or an unsaturated bond.

The lower limit of the number of carbon atoms in the hydrocarbon groups contained in $T^1$ to $T^4$ is 1 or more, and the upper limit is 20 or less, and may be 10 or less.

The lower limit of the number of carbon atoms in the alkoxy substituents contained in $T^1$ to $T^4$ is 1 or more, and the upper limit is 20 or less, and may be 10 or less.

The lower limit of the number of carbon atoms in the ester substituents contained in $T^1$ to $T^4$ is 2 or more, and the upper limit is 20 or less, and may be 10 or less.

The lower limit of the number of carbon atoms in the alkoxy groups contained in $T^1$ to $T^4$ is 1 or more, and the upper limit is 20 or less, and may be 10 or less.

The lower limit of the number of carbon atoms in the aryl groups contained in $T^1$ to $T^4$ is 6 or more, and the upper

limit is 20 or less, and may be 11 or less.

The lower limit of the number of carbon atoms in the ester groups contained in $T^1$ to $T^4$ is 2 or more, and the upper limit is 20 or less, and may be 10 or less.

The lower limit of the number of carbon atoms in the silyl groups contained in $T^1$ to $T^4$ is 3 or more, and the upper limit is 18 or less, and may be 12 or less. Examples of the silyl groups include trimethylsilyl group, triethylsilyl group, tri-n-propylsilyl group, triisopropylsilyl group, dimethylphenylsilyl group, methyldiphenylsilyl group, and triphenylsilyl group.

From the point of view of the ease of production, $T^1$ and $T^2$ in the ionomer of the present invention may be each a hydrogen atom and $T^3$ may be a hydrogen atom or a methyl group, or $T^1$ to $T^3$ may be all hydrogen atoms.

From the point of view of impact resistance, $T^4$ may be a C2-C20 ester group.

Specific examples of the acyclic monomers include those in which $T^4$ is a C2-C20 ester group, including (meth) acrylic acid esters.

When $T^4$ is a C2-C20 ester group, the acyclic monomer may be a compound represented by the structural formula: $CH_2=C(R^{21})CO_2(R^{22})$. Here, $R^{21}$ is a hydrogen atom or a C1-C10 hydrocarbon group and may have a branch, a ring, and/or an unsaturated bond. $R^{22}$ is a C1-C20 hydrocarbon group and may have a branch, a ring, and/or an unsaturated bond. Furthermore, the compound may contain a heteroatom at any position in $R^{22}$.

Examples of the compounds represented by the structural formula: $CH_2=C(R^{21})CO_2(R^{22})$ include compounds in which $R^{21}$ is a hydrogen atom or a C1-C5 hydrocarbon group. Examples further include acrylic acid esters in which $R^{21}$ is a hydrogen atom and methacrylic acid esters in which $R^{21}$ is a methyl group.

Specific examples of the compounds represented by the structural formula: $CH_2=C(R^{21})CO_2(R^{22})$ include methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, pentyl (meth)acrylate, hexyl (meth)acrylate, cyclohexyl (meth)acrylate, octyl (meth)acrylate, 2-ethylhexyl (meth)acrylate, nonyl (meth)acrylate, decyl (meth)acrylate, dodecyl (meth)acrylate, octadecyl (meth)acrylate, phenyl (meth)acrylate, toluyl (meth)acrylate, and benzyl (meth)acrylate.

Specific examples of the compounds include methyl acrylate, ethyl acrylate, n-butyl acrylate (nBA), isobutyl acrylate (iBA), t-butyl acrylate (tBA), and 2-ethylhexyl acrylate. In particular, the compound may be n-butyl acrylate (nBA), isobutyl acrylate (iBA), or t-butyl acrylate (tBA).

The acyclic monomers may be used singly, or a plurality thereof may be used in combination.

·Cyclic monomers

[Chem. 2]

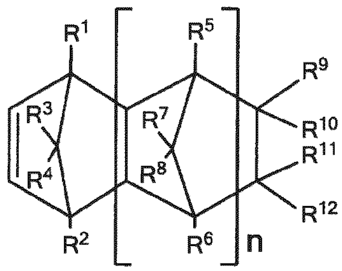

・・・(2)

[In general formula (2), $R^1$ to $R^{12}$ may be the same as or different from one another and are each selected from the group consisting of hydrogen atom, halogen atoms, and C1-C20 hydrocarbon groups; and the pair of $R^9$ and $R^{10}$ and the pair of $R^{11}$ and $R^{12}$ each may be combined to form a divalent organic group, or either $R^9$ or $R^{10}$ and either $R^{11}$ or $R^{12}$ may form a ring together.

The letter n indicates 0 or a positive integer. When n is 2 or greater, $R^5$ to $R^8$ in each repeating unit may be the same as or different from one another.]

Examples of the cyclic monomers include norbornene-containing olefins. Specific examples include compounds having a cycloolefin skeleton, such as norbornene, vinylnorbornene, ethylidenenorbornene, norbornadiene, tetracyclododecene, and tricyclo[4.3.0.$1^{2,5}$]dec-3-ene. For example, the cyclic monomer may be 2-norbornene (NB) or tetracyclo [6.2.1.$1^{3,6}$.$_0{}^{2,7}$]dodec-4-ene.

(4) Metal ions

The metal ion in the carboxylate salt group may be an ion of a divalent metal selected from the group consisting of

the Group 2 metals in the periodic table.

Specific examples include ions of beryllium (Be), magnesium (Mg), calcium (Ca), strontium (Sr), barium (Ba), and radium (Ra). From the point of view of the ease of handling, in particular, the ion may be of magnesium (Mg) or calcium (Ca).

The carboxylate salt group may be obtained by converting the ester group moiety of the copolymer into a metal-containing carboxylate salt. For example, this conversion is made by reacting the copolymer with a compound containing an ion of a Group 2 metal in the periodic table after the ester group of the copolymer has been hydrolyzed or pyrolyzed or while hydrolyzing or pyrolyzing the ester group of the copolymer.

The metal ions may be of a single metal or of a plurality of metals.

(5) Copolymers (P)

The copolymer (P) used as the base resin of the ionomer of the present invention is characterized in that the copolymer includes, as essential constituent units, the structural units (A) derived from ethylene and/or a C3-C20 α-olefin and the structural units (B) derived from a monomer having a carboxyl group and/or a dicarboxylic acid anhydride group, and optionally further includes the structural units (C) and in that these structural units are copolymerized substantially linearly, preferably in a random manner. The phrase "substantially linearly" means that the copolymer has no branches or the copolymer has a low frequency of branched structures and can be regarded as being linear. Specifically, the phrase indicates that the phase angle δ of the copolymer is 50 degrees or more.

The copolymer according to the present invention necessarily contains two or more kinds of monomer units including one or more kinds of the structural units (A) and one or more kinds of the structural units (B), and may further contain the additional structural units (C).

The structural units in the copolymer according to the present invention, and the structural unit contents will be described.

One structural unit in the copolymer is defined as a structure derived from one molecule of the corresponding monomer, namely, ethylene and/or the C3-C20 α-olefin (A), the monomer (B) having a carboxyl group and/or a dicarboxylic acid anhydride group, or the optional monomer (C).

The structural unit contents are the proportions in mol% of the respective structural units based on 100 mol% of the total of the structural units in the copolymer.

Structural unit content of the structural units (A):

The structural unit content of the structural units (A) according to the present invention is selected from, on the lower limit side, 60.0 mol% or more, preferably 70.0 mol% or more, more preferably 80.0 mol% or more, still more preferably 85.0 mol% or more, further preferably 90.0 mol% or more, still further preferably 95.0 mol% or more, and particularly preferably 96.7 mol% or more and, on the upper limit side, 99.0 mol% or less, preferably 98.0 mol% or less, more preferably 97.0 mol% or less, still more preferably 96.7 mol% or less, further preferably 95.0 mol% or less, and still further preferably 92.3 mol% or less.

If the content of the structural units derived from ethylene and/or a C3-C20 α-olefin (A) is less than 60.0 mol%, the copolymer may be poor in toughness. If the content is more than 99.0 mol%, the copolymer will have a high degree of crystallinity and may be deteriorated in transparency.

· Structural unit content of the structural units (B):

The structural unit content of the structural units (B) according to the present invention is selected from, on the lower limit side, 1.0 mol% or more, preferably 2.0 mol% or more, more preferably 3.3 mol% or more, still more preferably 5.0 mol% or more, and further preferably 7.5 mol% or more and, on the upper limit side, 20.0 mol% or less, preferably 15.0 mol% or less, more preferably 10.0 mol% or less, still more preferably 8.0 mol% or less, particularly preferably 6.0 mol% or less, and most preferably 5.0 mol% or less.

If the content of the structural units derived from the monomer (B) having a carboxyl group and/or a dicarboxylic acid anhydride group is less than 1.0 mol%, the copolymer will not exhibit sufficient adhesion to highly polar dissimilar materials. If the content is more than 20.0 mol%, the copolymer may fail to achieve sufficient mechanical properties.

The monomers having a carboxyl group and/or a dicarboxylic acid anhydride group may be used singly, or two or more may be used in combination.

· Structural unit content of the structural units (C):

The upper limit of the structural unit content of the structural units (C) according to the present invention is selected from 20.0 mol% or less, preferably 15.0 mol% or less, more preferably 10.0 mol% or less, still more preferably 5.0

mol% or less, and particularly preferably 3.0 mol% or less. The lower limit is not particularly limited and may be 0 mol%. When the content of the structural units derived from the optional monomer (C) is 20.0 mol% or less, the copolymer tends to exhibit sufficient mechanical properties.

The optional monomers (C) may be used singly, or two or more may be used in combination.

Numbers of branches per 1,000 carbon atoms in the copolymer (P):

In order to increase the elastic modulus and to obtain sufficient mechanical properties, the number of methyl branches in the copolymer of the present invention calculated by $^{13}$C-NMR may be 50 or less as the upper limit per 1,000 carbon atoms. The upper limit may be 5.0 or less, 2.0 or less, 1.0 or less, or 0.5 or less. The lower limit is not particularly limited, and less methyl branches are more preferable. Furthermore, the upper limit of the number of ethyl branches per 1,000 carbon atoms may be 3.0 or less, 2.0 or less, 1.0 or less, or 0.5 or less. The lower limit is not particularly limited, and less ethyl branches are more preferable. Furthermore, the upper limit of the number of butyl branches per 1,000 carbon atoms may be 7.0 or less, 5.0 or less, 3.0 or less, or 0.5 or less. The lower limit is not particularly limited, and less butyl branches are more preferable.

Methods for measuring the contents of the structural units derived from a monomer having a carboxyl group and/or a dicarboxylic acid anhydride group, of the structural units derived from an acyclic monomer, and of the structural units derived from a cyclic monomer in the copolymer, and for measuring the numbers of branches per 1,000 carbon atoms:

The contents of the structural units derived from a monomer having a carboxyl group and/or a dicarboxylic acid anhydride group, of the structural units derived from an acyclic monomer, and of the structural units derived from a cyclic monomer in the copolymer of the present invention, and the numbers of branches per 1,000 carbon atoms are measured based on a $^{13}$C-NMR spectrum. $^{13}$C-NMR measurement is performed as follows.

A sample weighing 200 to 300 mg is added to an NMR sample tube with an inner diameter of 10 mmφ together with 2.4 mL of a mixed solvent consisting of o-dichlorobenzene ($C_6H_4Cl_2$) and deuterated benzene bromide ($C_6D_5Br$) ($C_6H_4Cl_2/C_6D_5Br$ = 2/1 (by volume)) and hexamethyldisiloxane as the chemical shift reference substance. The sample tube is purged with nitrogen and is sealed. The materials are then dissolved by heating to give a uniform solution as an NMR measurement sample.

The NMR measurement is performed at 120°C using NMR apparatus AV400M from Bruker Japan K.K. equipped with a 10 mmφ cryoprobe.

A $^{13}$C-NMR spectrum is measured by an inverse gated decoupling method in which the sample temperature is 120°C, the pulse angle is 90°, the pulse interval is 51.5 seconds, and the number of scans is at least 512.

The $^{13}$C signal of hexamethyldisiloxane is set at 1.98 ppm, and the chemical shifts of other $^{13}$C signals are determined with reference to this chemical shift.

In the $^{13}$C-NMR spectrum obtained, the signals specific to the monomers or the branches present in the copolymer are identified and their intensities are compared to determine the contents of the structural units of the respective monomers in the copolymer and the numbers of branches. The positions of the signals specific to the monomers or the branches may be identified with reference to known data or may be identified uniquely depending on the sample. Such analytical techniques are common to those skilled in the art.

· Weight average molecular weight (Mw) and molecular weight distribution (Mw/Mn):

The lower limit of the weight average molecular weight (Mw) of the copolymer according to the present invention is usually 1,000 or more, preferably 6,000 or more, more preferably 10,000 or more, still more preferably 15,000 or more, and further preferably 20,000 or more. The upper limit is usually 2,000,000 or less, preferably 1,500,000 or less, more preferably 1,000,000 or less, particularly preferably 800,000 or less, and most preferably 100,000 or less.

If Mw is less than 1,000, properties, such as mechanical strength and impact resistance, of the copolymer will be insufficient. If Mw is more than 2,000,000, the copolymer will have an excessively high melt viscosity and is sometimes difficult to form into shapes.

The ratio (Mw/Mn) of the weight average molecular weight (Mw) to the number average molecular weight (Mn) of the copolymer according to the present invention is usually in the range of 1.5 to 4.0, preferably 1.6 to 3.5, more preferably 1.7 to 3.7, and still more preferably 1.9 to 2.4. If Mw/Mn is less than 1.5, the copolymer will be insufficient in processability, such as formability. If Mw/Mn is more than 4.0, the copolymer is sometimes poor in mechanical properties.

In the present invention, (Mw/Mn) is also written as the molecular weight distribution parameter.

The weight average molecular weight (Mw) and the number average molecular weight (Mn) in the present invention are determined by gel permeation chromatography (GPC). The molecular weight distribution parameter (Mw/Mn) is determined by further measuring the number average molecular weight (Mn) by gel permeation chromatography (GPC) and calculating the Mw to Mn ratio, Mw/Mn.

An example of the GPC measurement method according to the present invention is as follows.

(Measurement conditions)

Model: 150C manufactured by Waters
Detector: MIRAN 1A IR detector (measurement wavelength: 3.42 μm) manufactured by FOXBORO
Measurement temperature: 140°C
Solvent: Ortho-dichlorobenzene (ODCB)
Columns: AD806M/S (3 columns) manufactured by SHOWA DENKO K.K.
Flow rate: 1.0 mL/min
Injection volume: 0.2 mL

(Sample preparation)

The copolymer is dissolved into ODCB (containing 0.5 mg/mL BHT (2,6-di-t-butyl-4-methylphenol)) at 140°C in about 1 hour to give a 1 mg/mL sample solution.

(Calculation of the molecular weight (M))

The sample is analyzed by a standard polystyrene method. The retention volume is converted to molecular weight using a standard polystyrene calibration curve prepared beforehand. For example, the standard polystyrenes that are used may be brands from TOSOH CORPORATION (F380, F288, F128, F80, F40, F20, F10, F4, F1, A5000, A2500, A1000), or monodispersed polystyrenes from SHOWA DENKO K.K. (S-7300, S-3900, S-1950, S-1460, S-1010, S-565, S-152, S-66.0, S-28.5, S-5.05, each 0.07 mg/mL solution). Each is dissolved into ODCB (containing 0.5 mg/mL BHT) to give a 0.5 mg/mL solution, and 0.2 mL of the solution is injected. A calibration curve is thus prepared. For example, the calibration curve preparation uses a cubic equation obtained by least squares approximation or uses quartic approximation of the elution time and the logarithm of the molecular weight. The following numerical values are applied to the viscosity formula $[\eta] = K \times M\alpha$ used for the conversion to the molecular weight (M).

Polystyrene (PS): $K = 1.38 \times 10^{-4}$, $\alpha = 0.7$
Polyethylene (PE): $K = 3.92 \times 10^{-4}$, $\alpha = 0.733$
Polypropylene (PP): $K = 1.03 \times 10^{-4}$, $\alpha = 0.78$

· Melting point (Tm, °C):

The melting point of the copolymer according to the present invention is the maximum peak-top temperature of an endothermic curve measured with a differential scanning calorimeter (DSC). In a DSC endothermic curve, the vertical axis is heat flow (mW) and the horizontal axis is temperature (°C). When the endothermic curve shows a plurality of peaks, the temperature of the farthest peak from the baseline is taken as the maximum peak-top temperature. When the curve has a single peak, the maximum peak-top temperature is the temperature of that peak.

The melting point is preferably 50°C to 140°C, more preferably 60°C to 138°C, and most preferably 70°C to 135°C. If the melting point is below this range, heat resistance is not sufficient. If the melting point is higher than the above range, adhesion is sometimes poor.

In the present invention, for example, DSC (DSC 7020) manufactured by SII Nanotechnology is used. Approximately 5.0 mg of a sample is packed into an aluminum pan and is heated to 200°C at 10°C/min. The temperature is held isothermally at 200°C for 5 minutes, then lowered to 20°C at 10°C/min, and held isothermally at 20°C for 5 minutes. The temperature is raised again to 200°C at 10°C/min while recording an endothermic curve, from which the melting point is determined.

· Degree of crystallinity (%):

In the copolymer of the present invention, the degree of crystallinity observed by differential scanning calorimetry (DSC) is not particularly limited but is preferably more than 0%. The degree of crystallinity is more preferably more than 5%, and still more preferably 7% or more. If the degree of crystallinity is 0%, the copolymer may have insufficient toughness. The degree of crystallinity is also an index of transparency. While higher transparency is more preferable, the upper limit of

the degree of crystallinity is not particularly limited.

In the present invention, the degree of crystallinity may be determined by, for example, measuring the heat of fusion (ΔH) from the area of a melting endothermic peak obtained by the same DSC process as the measurement of the melting point, and dividing the heat of fusion by the heat of fusion of the perfect crystal of high-density polyethylene (HDPE), 293 J/g.

· Molecular structure of the copolymer:

The molecular chain terminals of the copolymer according to the present invention may be the structural unit (A) from ethylene and/or a C3-C20 α-olefin, the structural unit (B) from a monomer having a carboxyl group and/or a dicarboxylic acid anhydride group, or the structural unit (C) from an optional monomer.

The copolymer according to the present invention may be, for example, a random copolymer, a block copolymer, or a graft copolymer of the structural units (A) from ethylene and/or a C3-C20 α-olefin, the structural units (B) from a monomer having a carboxyl group and/or a dicarboxylic acid anhydride group, and the structural units (C) from an optional monomer. In particular, the copolymer may be a random copolymer because the copolymer can contain a large amount of the structural units (B).

An exemplary molecular structure (1) of general ternary copolymers is described below.

A random copolymer is such a copolymer that, referring to the exemplary molecular structure (1) illustrated below, the types of adjacent structural units are independent of the probability that the structural unit (A) from ethylene and/or a C3-C20 α-olefin, the structural unit (B) from a monomer having a carboxyl group and/or a dicarboxylic acid anhydride group, and the structural unit (C) from an optional monomer are found at arbitrarily selected positions in the molecular chain.

In the exemplary molecular structure (1) of the copolymer, as illustrated below, the structural units (A) from ethylene and/or a C3-C20 α-olefin, the structural units (B) from a monomer having a carboxyl group and/or a dicarboxylic acid anhydride group, and the structural units (C) from an optional monomer form a random copolymer.

[Chem. 3]

**-ABCAAABBCBAABACCAA-** • • • Exemplary molecular structure (1)

As a reference, an exemplary molecular structure (2) of the copolymer is illustrated in which the structural units (B) from a monomer having a carboxyl group and/or a dicarboxylic acid anhydride group are introduced by graft modification. Part of a copolymer of the structural units (A) from ethylene and/or a C3-C20 α-olefin and the structural units (C) from an optional monomer is graft modified with the structural units (B) from a monomer having a carboxyl group and/or a dicarboxylic acid anhydride group.

[Chem. 4]

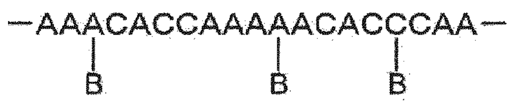

• • • Exemplary molecular structure (2)

The degree of random copolymerization in the copolymer may be determined by various methods. Japanese Patent Application Kokai Publication No. 2015-163691 and Japanese Patent Application Kokai Publication No. 2016-079408 describe in detail techniques for determining the degree of random copolymerization from the relationship between the comonomer contents and the melting point of the copolymer. From the above literature, the randomness can be judged as low when the melting point (Tm, °C) of the copolymer is higher than -3.74 × [Z] + 130 (wherein [Z] is the content of the comonomers/mol%).

When the copolymer according to the present invention is a random copolymer, the copolymer preferably satisfies the relation (I) below between the melting point (Tm, °C) observed in differential scanning calorimetry (DSC) and the content [Z] (mol%) of the total of the structural units (B) from a monomer having a carboxyl group and/or a dicarboxylic acid anhydride group and the structural units (C) from an optional monomer.

$$50 < Tm < -3.74 \times [Z] + 130 \cdots (I)$$

If the melting point (Tm, °C) of the copolymer is higher than -3.74 × [Z] + 130 (°C), the degree of random

copolymerization is low and mechanical properties, such as impact strength, are insufficient. If the melting point is lower than 50°C, the copolymer may be poor in rigidity.

In order to ensure that the molecular structure of the copolymer will be linear, the copolymer according to the present invention is preferably produced in the presence of a transition metal catalyst.

It is known that the molecular structure of a copolymer varies depending on the type of the production method, such as polymerization by a high-pressure radical polymerization process or metal-catalyzed polymerization.

The variable molecular structure can be controlled by selecting the type of the production method. As described in, for example, Japanese Patent Application Kokai Publication No. 2010-150532, the molecular structure can be also estimated from the complex elastic modulus measured with a rotational rheometer.

· Phase angle δ when the absolute value G* of complex elastic modulus is 0.1 MPa:

In the copolymer of the present invention, the lower limit of the phase angle δ when the absolute value G* of complex elastic modulus measured with a rotational rheometer is 0.1 MPa may be 50 degrees or more, may be 51 degrees or more, may be 54 degrees or more, may be 56 degrees or more, or may be 58 degrees or more. The upper limit may be 75 degrees or less or may be 70 degrees or less.

More specifically, when the phase angle δ (G* = 0.1 MPa) is 50 degrees or more when the absolute value G* of complex elastic modulus measured with a rotational rheometer is 0.1 MPa, the copolymer has a linear molecular structure and contains no long-chain branches or the structure contains a small amount of long-chain branches that does not adversely affect mechanical strength.

If the phase angle δ (G* = 0.1 MPa) is lower than 50 degrees when the absolute value G* of complex elastic modulus measured with a rotational rheometer is 0.1 MPa, the copolymer has a molecular structure containing an excessively large amount of long-chain branches and is poor in mechanical strength.

The phase angle δ when the absolute value G* of complex elastic modulus measured with a rotational rheometer is 0.1 MPa is affected by both the molecular weight distribution and long-chain branches. As long as the copolymer has Mw/Mn ≤ 4, more preferably Mw/Mn ≤ 3, the phase angle can serve as an indicator of the amount of long-chain branches and the value of δ (G* = 0.1 MPa) decreases with increasing amount of long-chain branches contained in the molecular structure. As long as the Mw/Mn of the copolymer is 1.5 or more, the value of δ (G* = 0.1 MPa) does not exceed 75 degrees even when the molecular structure does not contain long-chain branches.

The complex elastic modulus is measured as follows.

A sample is placed into a 1.0 mm thick hot press mold and is preheated in a hot press machine with a surface temperature of 180°C for 5 minutes. Subsequently, the sample is pressurized and depressurized repeatedly to remove the residual gas in the molten resin. The sample is further pressurized at 4.9 MPa and is held for 5 minutes. Subsequently, the sample is transferred to a press machine with a surface temperature of 25°C and is cooled by being held at a pressure of 4.9 MPa for 3 minutes, thus giving an approximately 1.0 mm thick pressed sheet made of the sample. The pressed sheet of the sample is processed into a 25 mm diameter circle as a specimen, which is then analyzed with a dynamic viscoelastometer, specifically, ARES rotational rheometer manufactured by Rheometrics, to measure the dynamic viscoelasticity in a nitrogen atmosphere under the following conditions.

- · Plates: φ25 mm parallel plates
- · Temperature: 160°C
- · Strain: 10%
- · Angular frequency range in measurement: $1.0 \times 10^{-2}$ to $1.0 \times 10^{2}$ rad/s
- · Number of data points: 5 points/decade

The phase angle δ is plotted against the common logarithm logG* of the absolute value G* (Pa) of complex elastic modulus, and the value of δ (degrees) at the plot corresponding to logG* = 5.0 is taken as δ (G* = 0.1 MPa). If any of the plots do not correspond to logG* = 5.0, the value of δ at logG* = 5.0 is determined by linear interpolation using the two plots above and below logG* = 5.0. When all the plots correspond to logG* < 5, a quadratic curve is drawn using the plots corresponding to the largest three values of logG* and the value of δ at logG* = 5.0 is extrapolated.

· Production of the copolymers

In order to ensure that the molecular structure will be linear, the copolymer according to the present invention is preferably produced in the presence of a transition metal catalyst.

· Polymerization catalysts

The type of the polymerization catalyst used in the production of the copolymer according to the present invention is not particularly limited as long as it can catalyze the copolymerization of the structural units (A), the structural units (B), and the optional structural units (C). Examples include Group 5 to Group 11 transition metal compounds having a chelating ligand.

Specific examples of preferred transition metals include vanadium atom, niobium atom, tantalum atom, chromium atom, molybdenum atom, tungsten atom, manganese atom, iron atom, platinum atom, ruthenium atom, cobalt atom, rhodium atom, nickel atom, palladium atom, and copper atom. Among these, Group 8 to Group 11 transition metals are preferable, Group 10 transition metals are more preferable, and nickel (Ni) and palladium (Pd) are particularly preferable. A single or a plurality of these metals may be used.

The chelating ligand has at least two atoms selected from the group consisting of P, N, O, and S, includes a bidentate or multidentate ligand, and is electronically neutral or anionic. Structures of chelating ligands are illustrated in the review by Brookhart et al. (Chem. Rev., 2000, 100, 1169).

Preferably, the chelating ligand may be a bidentate anionic P,O ligand. Examples of the bidentate anionic P,O ligands include phosphosulfonic acid, phosphocarboxylic acids, phosphophenols, and phosphoenolates. Examples of the chelating ligands further include bidentate anionic N,O ligands. Examples of the bidentate anionic N,O ligands include salicylaldiminates and pyridinecarboxylic acids. Examples of the chelating ligands further include diimine ligands, diphenoxide ligands, and diamide ligands.

The structure of the metal complex including the chelating ligand may be represented by the following structural formula (a) or (b) in which an optionally substituted arylphosphine, arylarsine, or arylantimony compound is coordinated.

[Chem. 5]

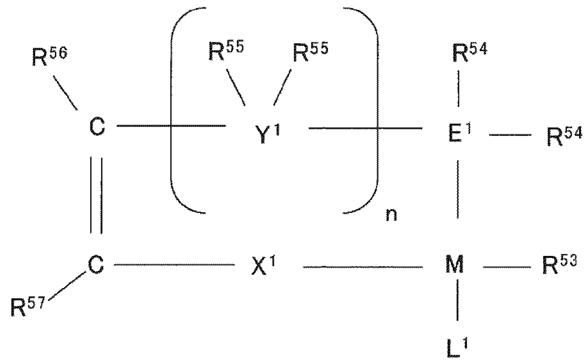

Structural formula (a)

[Chem. 6]

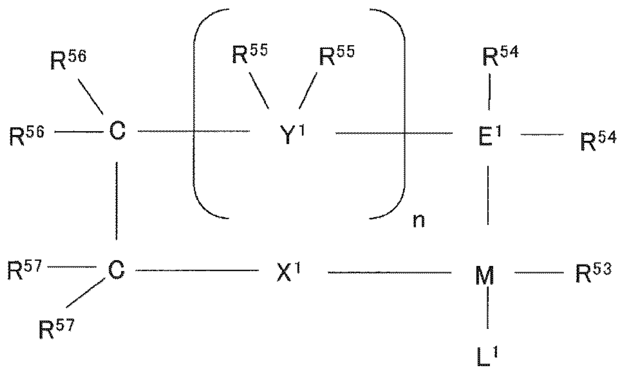

Structural formula (b)

[In the structural formula (a) and the structural formula (b),

M denotes a transition metal belonging to any of Group 5 to Group 11 of the periodic table of the elements, namely, any of the various transition metals described above;
$X^1$ denotes oxygen, sulfur, $-SO_3-$, or $-CO_2-$;
$Y^1$ denotes carbon or silicon;
n denotes an integer of 0 or 1;
$E^1$ denotes phosphorus, arsenic, or antimony;
$R^{53}$ and $R^{54}$ independently at each occurrence denote hydrogen or a C1-C30 hydrocarbon group optionally containing a heteroatom;
$R^{55}$ independently at each occurrence denotes hydrogen, a halogen, or a C1-C30 hydrocarbon group optionally containing a heteroatom;
$R^{56}$ and $R^{57}$ independently at each occurrence denote hydrogen, a halogen, a C1-C30 hydrocarbon group optionally containing a heteroatom, $OR^{52}$, $CO_2R^{52}$, $CO_2M'$, $C(O)N(R^{Si})_2$, $C(O)R^{52}$, $SR^{52}$, $SO_2R^{52}$, $SOR^{52}$, $OSO_2R^{52}$, $P(O)(OR^{S2})_{2-y}(R^{51})_y$, CN, $NHR^{52}$, $N(R^{52})_2$, $Si(OR^{51})_{3-x}(R^{51})_x$, $OSi(OR^{51})_{3-x}(R^{51})_x$, $NO_2$, $SO_3M'$, $PO_3M'_2$, $P(O)(OR^{52})_2M'$, or an epoxy-containing group;
$R^{51}$ denotes hydrogen or a C1-C20 hydrocarbon group;
$R^{52}$ denotes a C1-C20 hydrocarbon group;
M' denotes an alkali metal, an alkaline earth metal, ammonium, quaternary ammonium, or phosphonium, x denotes an integer from 0 to 3, y denotes an integer from 0 to 2;
$R^{56}$ and $R^{57}$ may be connected to each other to form an alicyclic ring, an aromatic ring, or a heterocycle containing a heteroatom selected from oxygen, nitrogen, and sulfur, the ring formed here is a 5- to 8-membered ring and may or may not have a substituent on the ring;
$L^1$ denotes a ligand coordinated to M; and
$R^{53}$ and $L^1$ may be bonded to each other to form a ring.]

More preferred transition metal complexes are represented by the following structural formula (c).

[Chem. 7]

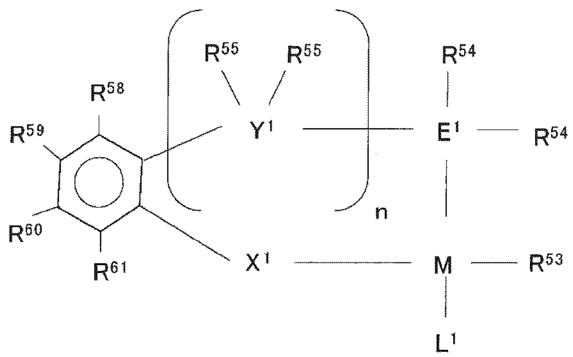

Structural formula (c)

[In the structural formula (c),

M denotes a transition metal belonging to any of Group 5 to Group 11 of the periodic table of the elements, namely, any of the various transition metals described above;
$X^1$ denotes oxygen, sulfur, $-SO_3-$, or $-CO_2-$;
$Y^1$ denotes carbon or silicon;
n denotes an integer of 0 or 1;
$E^1$ denotes phosphorus, arsenic, or antimony;
$R^{53}$ and $R^{54}$ independently at each occurrence denote hydrogen or a C1-C30 hydrocarbon group optionally containing a heteroatom;
$R^{55}$ independently at each occurrence denotes hydrogen, a halogen, or a C1-C30 hydrocarbon group optionally containing a heteroatom;
$R^{58}$, $R^{59}$, $R^{60}$, and $R^{61}$ independently at each occurrence denote hydrogen, a halogen, a C1-C30 hydrocarbon group

optionally containing a heteroatom, $OR^{52}$, $CO_{2R}^{52}$, $CO_2M'$, $C(O)N(R^{51})_2$, $C(O)R^{52}$, $SR^{52}$, $SO_2R^{52}$, $SOR^{S2}$, $OSO_2R^{52}$, $P(O)(OR^{52})_{2-y}(R^{51})_y$, CN, $NHR^{52}$, $N(R^{52})_2$, $Si(OR^{51})_{3-x}(R^{51})_x$, $OSi(OR^{51})_{3-x}(R^{51})_x$, $NO_2$, $SO_3M'$, $PO_3M'_2$, $P(O)(OR^{52})_2M'$, or an epoxy-containing group;
$R^{51}$ denotes hydrogen or a C1-C20 hydrocarbon group;
$R^{52}$ denotes a C1-C20 hydrocarbon group;
M' denotes an alkali metal, an alkaline earth metal, ammonium, quaternary ammonium, or phosphonium, x denotes an integer from 0 to 3, y denotes an integer from 0 to 2;
a plurality of groups appropriately selected from $R^{58}$ to $R^{61}$ may be connected to one another to form an alicyclic ring, an aromatic ring, or a heterocycle containing a heteroatom selected from oxygen, nitrogen, and sulfur, the ring formed here is a 5- to 8-membered ring and may or may not have a substituent on the ring;
$L^1$ denotes a ligand coordinated to M; and
$R^{53}$ and $L^1$ may be bonded to each other to form a ring.]

Here, for example, so-called SHOP catalysts and Drent catalysts are typically known as catalysts that are composed of a Group 5 to Group 11 transition metal compound having a chelating ligand.
The SHOP catalysts are catalysts in which a phosphorus-based ligand having an optionally substituted aryl group is coordinated to nickel metal (see, for example, WO 2010-050256).
The Drent catalysts are catalysts in which a phosphorus-based ligand having an optionally substituted aryl group is coordinated to palladium metal (see, for example, Japanese Patent Application Kokai Publication No. 2010-202647).

· Methods for producing the copolymers:

The method for producing the copolymer according to the present invention is not limited.
Examples of the polymerization methods include slurry polymerization in which at least part of the polymer produced forms a slurry in a medium, bulk polymerization in which the liquefied monomers themselves are used as a medium, gas-phase polymerization in vaporized monomers, and high-pressure ionic polymerization in which at least part of the polymer produced is dissolved in a monomer liquefied at high temperature and high pressure.
The polymerization mode may be batch polymerization, semi-batch polymerization, or continuous polymerization.
Furthermore, the polymerization may be living polymerization or may be performed while involving chain transfer.
Furthermore, the polymerization may involve a so-called chain shuttling agent (CSA) to perform chain shuttling reaction or coordinative chain transfer polymerization (CCTP).
Specific production processes and conditions are disclosed in, for example, Japanese Patent Application Kokai Publication No. 2010-260913 and Japanese Patent Application Kokai Publication No. 2010-202647.

· Methods for introducing carboxyl groups and/or dicarboxylic acid anhydride groups into the copolymers:

Carboxyl groups and/or dicarboxylic acid anhydride groups may be introduced into the copolymer according to the present invention by any methods without limitation.
Carboxyl groups and/or dicarboxylic acid anhydride groups may be introduced by various methods without departing from the spirit of the present invention.
For example, carboxyl groups and/or dicarboxylic acid anhydride groups may be introduced by directly adding a comonomer having a carboxyl group and/or a dicarboxylic acid anhydride group to the copolymerization or by modifying a copolymer of carboxyl-free monomers so as to introduce carboxyl groups and/or dicarboxylic acid anhydride groups.
The modification that introduces carboxyl groups and/or dicarboxylic acid anhydride groups, for example, the modification that introduces a carboxylic acid may be copolymerization using an acrylic acid ester followed by hydrolysis into the carboxylic acid, or may be copolymerization using t-butyl acrylate followed by pyrolysis into the carboxylic acid.
The hydrolysis or the pyrolysis may involve a conventionally known acid/base catalyst as a reaction promoting additive. The acid/base catalysts are not particularly limited. Examples of such catalysts that may be appropriately used include alkali metal or alkaline earth metal hydroxides, such as sodium hydroxide, potassium hydroxide, and lithium hydroxide; alkali metal or alkaline earth metal carbonates, such as sodium hydrogen carbonate and sodium carbonate; solid acids, such as montmorillonite; inorganic acids, such as hydrochloric acid, nitric acid, and sulfuric acid; and organic acids, such as formic acid, acetic acid, benzoic acid, citric acid, p-toluenesulfonic acid, trifluoroacetic acid, and trifluoromethanesulfonic acid.
From such points of view as the reaction promoting effects, the price, and the corrosivity to equipment, sodium hydroxide, potassium hydroxide, sodium carbonate, p-toluenesulfonic acid, and trifluoroacetic acid are preferable, and p-toluenesulfonic acid and trifluoroacetic acid are more preferable.

(6) Ionomers

The ionomer according to the present invention is such that at least part of the carboxyl groups and/or the dicarboxylic acid anhydride groups in the structural units (B) in the copolymer (P) of the present invention are converted by neutralization to a metal-containing carboxylate salt containing a metal ion of at least one metal selected from Group 2 of the periodic table, and the ionomer has the characteristics (a) and (b) below:

(a) The phase angle δ is 50 degrees to 75 degrees when the absolute value G* of complex elastic modulus measured with a rotational rheometer is 0.1 MPa.
(b) The degree of neutralization is 1 to 90 mol%.

In the ionomer, part of the carboxyl groups in the structural units (B) in the copolymer (P) have been neutralized with a Group 2 metal. However, the amount of the moieties corresponding to the structural units (B) is basically unchanged between the copolymer (P) and the ionomer. Thus, the lower limit of the amount of the moieties in the ionomer corresponding to the structural units (B) is 1.0 mol% or more, and the upper limit is 20.0 mol% or less.

· Metal ions

The metal ion contained in the ionomer according to the present invention is an ion of at least one Group 2 metal in the periodic table selected from the group consisting of $Be^{2+}$, $Mg^{2+}$, $Ca^{2+}$, $Sr^{2+}$, $Ba^{2+}$, and $Ra^{2+}$. The ion may be particularly preferably at least one selected from the group consisting of $Mg^{2+}$, $Ca^{2+}$, and $Ba^{2+}$, and may be more preferably $Mg^{2+}$.
Where necessary, two or more kinds of these metal ions may be mixed. In addition to the ion of Group 2 metal in the periodic table, the ionomer may contain a metal ion used in conventionally known ionomers, specifically, an ion(s) of Group 1, Group 11, and/or Group 12 metal in the periodic table without impairing the advantageous effects of the present invention.

(a) Phase angle δ (the structure of the ionomer)

Similarly to the copolymer according to the present invention, the ionomer according to the present invention has a substantially linear structure and is thus characterized in that the phase angle δ is in the range of 50 degrees to 75 degrees when the absolute value G* of complex elastic modulus measured with a rotational rheometer is 0.1 MPa. If the phase angle δ (G* = 0.1 MPa) is less than 50 degrees, the molecular structure of the ionomer contains an excessively large amount of long-chain branches and the ionomer exhibits poor mechanical strength. The value of δ (G* = 0.1 MPa) does not exceed 75 degrees even when the molecular structure does not contain long-chain branches.
In order to enhance the mechanical strength of the ionomer of the present invention, the lower limit of the phase angle δ is preferably 51 degrees or more, more preferably 54 degrees or more, still more preferably 56 degrees or more, and further preferably 58 degrees or more. The upper limit is not particularly limited and is preferably as close to 75 degrees as possible.

(b) Degree of neutralization (mol%)

The content of metal ions is preferably such that at least part of the carboxyl groups and/or the dicarboxylic acid anhydride groups in the copolymer as the base polymer are neutralized. The degree of neutralization (the average degree of neutralization) is preferably 1 to 90 mol%, more preferably 5 to 85 mol%, and still more preferably 10 to 80 mol%.
The degree of neutralization may be determined from the ratio of the total molar amount of the metal ion that is the product of the valance multiplied by the molar amount of the metal ion, to the total molar amount of the carboxyl groups that may be included in the carboxyl groups and/or the dicarboxylic acid anhydride groups in the copolymer.
When forming a carboxylate salt, the dicarboxylic acid anhydride group is ring-opened into the dicarboxylic acid. Thus, the total molar amount of the carboxyl groups is calculated assuming that 1 mol of the dicarboxylic acid anhydride groups contain 2 mol of the carboxyl groups. Since the ion of a Group 2 metal in the periodic table has a valence of +2, the total molar amount thereof in the calculation of the degree of neutralization is obtained by 2 × mol assuming that 1 mol can form a salt with 2 mol of the carboxyl groups.
When the degree of neutralization is high, the ionomer has high tensile strength, high tensile failure stress, and low tensile failure strain, but tends to show a low melt flow rate (MFR). When, on the other hand, the degree of neutralization is low, the ionomer has an appropriate MFR but tends to be low in tensile elastic modulus and tensile failure stress and high in tensile failure strain.
If the degree of neutralization is less than 1 mol%, the ionomer may be insufficient in toughness (strength and impact resistance). If the degree of neutralization is higher than 90 mol%, the adhesion with respect to highly polar

dissimilar materials may be insufficient.

· Melt flow rate (MFR) (fluidity) of the ionomers:

In order to ensure that the ionomer of the present invention will exhibit sufficient fluidity, the lower limit of the MFR of the ionomer is preferably more than 0.1 as measured at a temperature of 190°C and a load of 21.18 N (= 2.16 kg) in accordance with Table 1-Condition 7 of JIS K-7210 (1999). The lower limit is more preferably more than 0.3, and still more preferably more than 0.5. The upper limit is preferably 100 or less, more preferably 50 or less, and still more preferably 30 or less.
The MFR is an index of fluidity. The fluidity can be judged as higher with increasing value of MFR.
The melt flow rate (MFR) can be measured by the method described later in Examples.

· Tensile impact strength (impact resistance) of the ionomers:

In order to ensure that the ionomer of the present invention has sufficient impact resistance, the value of tensile impact of the ionomer according to the tensile impact test described in JIS K7160 (1996), Method B, is preferably 300 kJ/$m^2$ or more, more preferably 350 kJ/$m^2$ or more, and still more preferably 400 kJ/$m^2$ or more.
The tensile impact test may be performed by the method described later in Examples.

· Bond strength (adhesion) of the ionomers:

In order to ensure that the ionomer of the present invention will exhibit sufficient adhesion to highly polar dissimilar materials, the aluminum (Al) bond strength of the ionomer according to the bond strength measurement test described later in Examples is preferably 0.3 N/10 mm or more, more preferably 0.5 N/10 mm or more, still more preferably 1.0 N/10 mm or more, and particularly preferably 1.5 N/10 mm or more.

· Degree of crystallinity (%) of the ionomers:

In order to ensure that the ionomer of the present invention has sufficient toughness, the lower limit of the degree of crystallinity observed by differential scanning calorimetry (DSC) of the ionomer is preferably more than 0%, more preferably more than 5%, and still more preferably 7% or more. From the point of view of the transparency of the ionomer, the upper limit is preferably 50% or less, more preferably 40% or less, and still more preferably 35% or less. The degree of crystallinity is an index of transparency. The transparency can be judged as higher with decreasing degree of crystallinity of the ionomer.

· Tensile failure strength of the ionomers:

In order to ensure that the ionomer of the present invention has sufficient strength, the tensile failure strength of the ionomer according to the tensile impact test described in JIS K7161 (1994) is preferably 10 MPa or more, more preferably 20 MPa or more, and still more preferably 30 MPa or more.
The tensile test may be performed by the method described later in Examples.
Because the ionomer of the present invention excels in the balance among fluidity, impact resistance, and adhesion, it is preferable that the ionomer further have at least one of the MFR, the tensile impact strength, and the bond strength described above.

· Ionomer production methods

The ionomer according to the present invention may be obtained by introducing carboxyl groups and/or dicarboxylic acid anhydride groups into a copolymer by the method described hereinabove, and subjecting the resultant ethylene and/or C3-C20 α-olefin/unsaturated carboxylic acid copolymer to a conversion step in which the copolymer is treated with a metal salt containing a metal ion of at least one metal selected from Group 2 of the periodic table and is thereby converted into a metal-containing carboxylate salt. Alternatively, the ionomer according to the present invention may be obtained through a thermal conversion step in which an ethylene and/or C3-C20 α-olefin/unsaturated carboxylic acid ester copolymer is heated and at least part of the ester groups in the copolymer are converted to a metal-containing carboxylate salt containing a metal ion of at least one metal selected from Group 2 of the periodic table.
In the case where the ionomer is produced after the introduction of carboxyl groups and/or dicarboxylic acid anhydride groups into the polymer, the production method is, for example, as follows. A metal ion scavenger, such as ethylene/(meth)acrylic acid ((M)AA) copolymer, and a metal salt are kneaded together optionally under heating conditions

to give a metal ion source. The metal ion source is added to the ionomer precursor resin in an amount that will provide the desired degree of neutralization. The mixture is then kneaded to give the ionomer.

The thermal conversion step may be such that (i) the ethylene and/or C3-C20 $\alpha$-olefin/unsaturated carboxylic acid ester copolymer is heated and hydrolyzed or pyrolyzed into an ethylene and/or C3-C20 $\alpha$-olefin/unsaturated carboxylic acid copolymer, which is then reacted with a compound containing an ion of a Group 2 metal in the periodic table to convert the carboxylic acid in the ethylene and/or C3-C20 $\alpha$-olefin/unsaturated carboxylic acid copolymer into a metal-containing carboxylate salt; or may be such that (ii) the ethylene and/or C3-C20 $\alpha$-olefin/unsaturated carboxylic acid ester copolymer is heated and, while hydrolyzing or pyrolyzing the ester groups in the copolymer, is reacted with a compound containing an ion of a Group 2 metal in the periodic table to convert the ester group moieties in the ethylene and/or C3-C20 $\alpha$-olefin/unsaturated carboxylic acid ester copolymer into a metal-containing carboxylate salt.

The metal ion-containing compound may be, for example, an oxide, a hydroxide, a carbonate, a bicarbonate, an acetate, or a formate of a Group 2 metal in the periodic table.

The metal ion-containing compound may be supplied to the reaction system in the form of particles or fine powder, or may be supplied to the reaction system after being dissolved or dispersed in water or an organic solvent. Alternatively, the compound may be supplied to the reaction system as a masterbatch including an ethylene/unsaturated carboxylic acid copolymer or an olefin copolymer as a base polymer. The reaction is advantageously allowed to proceed smoothly when the compound is supplied to the reaction system as the masterbatch.

The reaction with the metal ion-containing compound may be carried out by melt-kneading the materials using various types of equipment, such as a vent extruder, a Banbury mixer, or a roll mill. The reaction may be batchwise or continuous. The reaction is preferably carried out continuously using an extruder equipped with a degassing device, such as a vent extruder, for the reason that the reaction is allowed to proceed smoothly by discharging water and carbon dioxide by-products through the degassing device.

When the copolymer is reacted with the metal ion-containing compound, a small amount of water may be injected to accelerate the reaction.

The temperature at which the ethylene and/or C3-C20 $\alpha$-olefin/unsaturated carboxylic acid ester copolymer is heated may be any temperature that converts the ester into the carboxylic acid. If the heating temperature is too low, the ester is not converted into the carboxylic acid. If the heating temperature is too high, the copolymer undergoes decarbonylation or decomposition. Thus, the heating temperature in the present invention is preferably in the range of 80°C to 350°C, more preferably 100°C to 340°C, still more preferably 150°C to 330°C, and further preferably 200°C to 320°C.

The reaction time varies depending on factors, such as the heating temperature and the reactivity of the ester group moieties, but is usually 1 minute to 50 hours, more preferably 2 minutes to 30 hours, still more preferably 2 minutes to 10 hours, further preferably 2 minutes to 3 hours, and particularly preferably 3 minutes to 2 hours.

In the above step, the reaction atmosphere is not particularly limited. It is, however, generally preferable that the reaction be performed under a stream of an inert gas. Examples of the inert gases that may be used include nitrogen, argon, and carbon dioxide. The gas may contain a small amount of oxygen or air.

The reactor used in the above step is not particularly limited and may be based on any technique without limitation as long as the copolymer can be stirred substantially uniformly. Use may be made of a glass vessel equipped with a stirrer, or an autoclave (AC). Alternatively, any conventionally known kneading device may be used, such as a Brabender Plastograph, a single-screw or twin-screw extruder, a high-power screw kneader, a Banbury mixer, a kneader, or a roll.

Whether the ionomer base resin has been converted into the ionomer by the introduction of metal ions may be confirmed by measuring an IR spectrum of the resin obtained and checking whether the peak assigned to the carbonyl groups of the carboxylic acid (the dimer) has decreased. The degree of neutralization may be determined by calculation from the molar ratio as described hereinabove or by similarly examining the decrease in the peak assigned to the carbonyl groups of the carboxylic acid (the dimer) and the increase in the peak assigned to the carbonyl groups of the carboxylate salt groups.

· Additives

The ionomer according to the present invention may contain conventionally known additives without departing from the spirit of the present invention. Exemplary additives include antioxidants, UV absorbers, lubricants, antistatic agents, colorants, pigments, crosslinking agents, blowing agents, nucleating agents, flame retardants, conductive materials, and fillers.

(7) Highly polar dissimilar materials

The ionomer of the present invention has excellent bonding performance with respect to highly polar dissimilar materials. Specific examples of the highly polar dissimilar materials that can benefit from the high bonding performance

according to the present invention include polyethylene resins, such as ethylene-vinyl acetate copolymer and ethylene-acrylic acid ester copolymer; vinyl polymers, such as polyvinyl chloride, polyvinylidene chloride, polystyrene, polyacrylate, and polyacrylonitrile; polyamide resins, such as nylon 6, nylon 66, nylon 10, nylon 11, nylon 12, nylon 610, and poly-m-xylylene adipamide; polyester resins, such as polyethylene terephthalate, polyethylene terephthalate/isophthalate, polybutylene terephthalate, polylactate, polybutylene succinate, and aromatic polyesters; polyvinyl alcohol, ethylene/-vinyl alcohol copolymers, polycarbonate resins, adhesive fluororesins, phenolic resins, epoxy resins, urea resins, melamine resins, urea resins, alkyd resins, unsaturated polyesters, polyurethanes; thermosetting resins, such as thermosetting polyimides; films or sheets (stretched products and printed products thereof) of cellulose polymers and other film-forming thermoplastic resins, such as cellophane; foils and sheets of metals, such as aluminum, iron, copper, or alloys based on these metals; inorganic oxide-deposited films, such as silica-deposited plastic films and alumina-deposited plastic films; metallized films having metals, such as gold, silver, and aluminum, or compounds of these metals other than oxides; papers, such as wood free paper, kraft paper, paperboard, glassine paper, and synthetic paper; cellophane, woven fabrics, and nonwoven fabrics.

EXAMPLES

Hereinbelow, the present invention will be described in greater detail by presenting Examples and Comparative Examples without limiting the scope of the invention to such Examples.
In Examples and Comparative Examples, properties were measured and evaluated by the methods described below.
In the tables, "no data" means not measured and "not detected" means below the detection limit.

<Measurements and evaluations>

(1) Measurement of phase angle δ (G* = 0.1 MPa) when the absolute value G* of complex elastic modulus is 0.1 MPa

1) Provision of sample and measurement

A sample was placed into a 1.0 mm thick hot press mold and was preheated in a hot press machine with a surface temperature of 180°C for 5 minutes. Subsequently, the sample was pressurized and depressurized repeatedly to remove the residual gas in the molten resin. The sample was further pressurized at 4.9 MPa and was held for 5 minutes. Subsequently, the sample was transferred to a press machine with a surface temperature of 25°C and was cooled by being held at a pressure of 4.9 MPa for 3 minutes, thus giving an approximately 1.0 mm thick pressed sheet made of the sample. The pressed sheet of the sample was processed into a 25 mm diameter circle as a specimen, which was then analyzed with a dynamic viscoelastometer, specifically, ARES rotational rheometer manufactured by Rheometrics, to measure the dynamic viscoelasticity in a nitrogen atmosphere under the following conditions.

- Plates: φ25 mm (diameter) parallel plates
- Temperature: 160°C
- Strain: 10%
- Angular frequency range in measurement: $1.0 \times 10^{-2}$ to $1.0 \times 10^{2}$ rad/s
- Number of data points: 5 points/decade

The phase angle δ was plotted against the common logarithm logG* of the absolute value G* (Pa) of complex elastic modulus, and the value of δ (degrees) at the plot corresponding to logG* = 5.0 was taken as δ (G* = 0.1 MPa). When any of the plots did not correspond to logG* = 5.0, the value of δ at logG* = 5.0 was determined by linear interpolation using the two plots above and below logG* = 5.0. When all the plots corresponded to logG* < 5, a quadratic curve was drawn using the plots corresponding to the largest three values of logG* and the value of δ at logG* = 5.0 was extrapolated.

(2) Measurement of weight average molecular weight (Mw) and molecular weight distribution parameter (Mw/Mn)

The weight average molecular weight (Mw) was determined by gel permeation chromatography (GPC). The molecular weight distribution parameter (Mw/Mn) was determined by further measuring the number average molecular weight (Mn) by gel permeation chromatography (GPC) and calculating the Mw to Mn ratio, Mw/Mn.
The measurement was performed in accordance with the following procedure under the following conditions.

1) Sample pretreatment

When the sample contained a carboxylic acid group, the measurement was made after the sample was subjected to an esterification treatment, such as methyl esterification using, for example, diazomethane, trimethylsilyl (TMS) diazomethane, or the like. When the sample contained a carboxylate salt group, the measurement was made after the sample was subjected to an acid treatment to convert the carboxylate salt group into the carboxylic acid group, and further the esterification treatment described above.

2) Preparation of sample solution

A 4 mL vial container was charged with 3 mg of the sample and 3 mL of o-dichlorobenzene and was closed with a screw cap and a Teflon (registered trademark) septum. The container was then shaken at 150°C for 2 hours using high-temperature shaker SSC-7300 manufactured by Senshu Scientific Co., Ltd. After the completion of the shaking, the absence of insolubles was visually confirmed.

3) Measurement

One high-temperature GPC column Showdex HT-G and two high-temperature GPC columns Showdex HT-806M manufactured by SHOWA DENKO K.K. were connected to Alliance GPCV 2000 manufactured by Waters. The measurement was performed while using o-dichlorobenzene as an eluent at a temperature of 145°C and a flow rate of 1.0 mL/min.

4) Calibration curve

Column calibration was performed as follows. Monodispersed polystyrenes manufactured by SHOWA DENKO K.K. (S-7300, S-3900, S-1950, S-1460, S-1010, S-565, S-152, S-66.0, S-28.5, S-5.05, each 0.07 mg/mL solution), n-eicosane, and n-tetracontane were measured under the same conditions as described above, and the elution time and the logarithm of molecular weight were approximated by a quartic equation. The following formula was used for the conversion of polystyrene molecular weight ($M_{PS}$) and polyethylene molecular weight ($M_{PE}$).

$$M_{PE} = 0.468 \times M_{PS}$$

(3) Melt flow rate (MFR)

The MFR was measured at a temperature of 190°C and a load of 21.18 N (= 2.16 kg) in accordance with Table 1-Condition 7 of JIS K-7210 (1999). In the tables, "< 0.01" means that the resin did not flow under the test conditions and the measurement was impossible.

(4) Melting point and degree of crystallinity

The melting point is indicated by the peak-top temperature of an endothermic curve measured with a differential scanning calorimeter (DSC). The measurement was made under the following measurement conditions using a DSC (DSC 7020) manufactured by SII Nanotechnology.

Approximately 5.0 mg of a sample was packed into an aluminum pan and was heated to 200°C at 10°C/min. The temperature was held at 200°C for 5 minutes, then lowered to 30°C at 10°C/min, and held at 30°C for 5 minutes. The temperature was raised again at 10°C/min while recording an endothermic curve. In the endothermic curve, the maximum peak-top temperature was taken as the melting point Tm, and the heat of fusion (ΔH) was determined from the area of the melting endothermic peak. The degree of crystallinity (%) was calculated by dividing by the heat of fusion by the heat of fusion of the perfect crystal of high-density polyethylene (HDPE), 293 J/g.

(5) Methods for measuring the amounts of the structural units derived from a monomer having a carboxyl group and/or a dicarboxylic acid anhydride group, of the structural units derived from an acyclic monomer, and of the structural units derived from a cyclic monomer, and for measuring the numbers of branches per 1,000 carbon atoms

The amounts of the structural units derived from a monomer having a carboxyl group and/or a dicarboxylic acid anhydride group, of the structural units derived from an acyclic monomer, and of the structural units derived from a cyclic monomer in the copolymer of the present invention, and the numbers of branches per 1,000 carbon atoms can be

measured based on a $^{13}C$-NMR spectrum. $^{13}C$-NMR measurement was performed as follows.

A sample weighing 200 to 300 mg was added to an NMR sample tube with an inner diameter of 10 mmφ together with 2.4 mL of a mixed solvent consisting of o-dichlorobenzene ($C_6H_4Cl_2$) and deuterated benzene bromide ($C_6D_5Br$) ($C_6H_4Cl_2/C_6D_5Br$ = 2/1 (by volume)) and hexamethyldisiloxane as the chemical shift reference substance. The sample tube was purged with nitrogen and was sealed. The materials were then dissolved by heating to give a uniform solution as an NMR measurement sample.

The NMR measurement was performed at 120°C using NMR apparatus AV400M from Bruker Japan K.K. equipped with a 10 mmφ cryoprobe.

A $^{13}C$-NMR spectrum was measured by an inverse gated decoupling method in which the sample temperature was 120°C, the pulse angle was 90°, the pulse interval was 51.5 seconds, and the number of scans was at least 512.

The $^{13}C$ signal of hexamethyldisiloxane was set at 1.98 ppm, and the chemical shifts of other $^{13}C$ signals were determined with reference to this chemical shift.

1) Pretreatment of the sample

When the sample contained a carboxylate salt group, the measurement was made after the sample was subjected to an acid treatment to convert the carboxylate salt group into the carboxyl group. When the sample contains a carboxyl group, an esterification treatment, such as methyl esterification using, for example, diazomethane, trimethylsilyl (TMS) diazomethane, or the like may be performed appropriately.

2) Calculation of the amounts of the structural units derived from a monomer having a carboxyl group and/or a dicarboxylic acid anhydride group, of the structural units derived from an acyclic monomer, and of the structural units derived from a cyclic monomer

<E/tBA>

The quaternary carbon signal assigned to the t-butyl acrylate group in tBA is detected at 79.6 to 78.8 in the $^{13}C$-NMR spectrum. The amount of the comonomer was calculated from the following formula using the signal intensities.

$$\text{Total amount of tBA (mol\%)} = I\,(\text{tBA}) \times 100/[I\,(\text{tBA}) + I\,(\text{E})]$$

Here, I (tBA) and I (E) are quantities represented by the following formulas, respectively.

$$I\,(\text{tBA}) = I_{79.6\text{-}78.8}$$

$$I\,(\text{E}) = (I_{180.0\text{-}135.0} + I_{120.0\text{-}5.0} - I\,(\text{tBA}) \times 7)/2$$

<E/tBA/iBA>

In the $^{13}C$-NMR spectrum, the quaternary carbon signal assigned to the t-butyl acrylate group in tBA is detected at 79.6 to 78.8 ppm, the methylene signal assigned to the isobutoxy group in iBA is detected at 70.5 to 69.8 ppm, and the methyl signal assigned to the isobutoxy group is detected at 19.5 to 18.9 ppm. The amounts of the comonomers were calculated from the following formulas using the signal intensities.

$$\text{Total amount of tBA (mol\%)} = I\,(\text{tBA}) \times 100/[I\,(\text{tBA}) + I\,(\text{iBA}) + I\,(\text{E})]$$

$$\text{Total amount of iBA (mol\%)} = I\,(\text{iBA}) \times 100/[I\,(\text{tBA}) + I\,(\text{iBA}) + I\,(\text{E})]$$

Here, I (tBA), I (iBA), and I (E) are quantities represented by the following formulas, respectively.

$$I\,(\text{tBA}) = I_{79.6\text{-}78.8}$$

$$I\,(\text{iBA}) = (I_{70.5\text{-}69.8} + I_{19.5\text{-}18.9})/3$$

$$I\ (E) = (I_{180.0\text{-}135.0} + I_{120.0\text{-}5.0} - I\ (iBA) \times 7 - I\ (tBA) \times 7)/2$$

<E/tBA/NB>

In the $^{13}C$-NMR spectrum, the quaternary carbon signal assigned to the t-butyl acrylate group in tBA is detected at 79.6 to 78.8 ppm and the methine carbon signal assigned to NB is detected at 41.9 to 41.1 ppm. The amounts of the comonomers were calculated from the following formulas using the signal intensities.

$$\text{Total amount of tBA (mol\%)} = I\ (tBA) \times 100/[I\ (tBA) + I\ (NB) + I\ (E)]$$

$$\text{Total amount of NB (mol\%)} = I\ (NB) \times 100/[I\ (tBA) + I\ (NB) + I\ (E)]$$

Here, I (tBA), I (NB), and I (E) are quantities represented by the following formulas, respectively.

$$I\ (tBA) = I_{79.6\text{-}78.8}$$

$$I\ (NB) = (I_{41.9\text{-}41.1})/2$$

$$I\ (E) = (I_{180.0\text{-}135.0} + I_{120.0\text{-}5.0} - I\ (NB) \times 7 - I\ (tBA) \times 7)/2$$

When the structural unit content of any monomer is shown with an inequality sign as "< 0.1", such units are present as constituent units in the copolymer but the amount thereof is less than 0.1 mol% considering the significant figures.

3) Calculation of the numbers of branches per 1,000 carbon atoms

The copolymer may be of isolated type in which an individual branch is present on the main chain or may be of composite type (counter type in which a branch and a branch are opposed to each other via the main chain, branched-branch type in which a branch chain has a branch thereon, or chained type).

The following illustrate exemplary ethyl branch structures. In the example of the counter type, R denotes an alkyl group.

[Chem. 8]

Ethyl branch (isolated type)

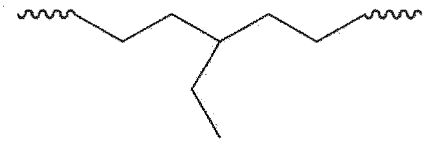

Ethyl branch (composite type)

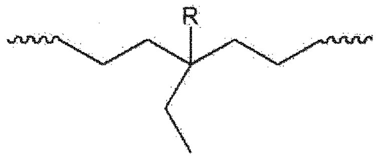

Counter type

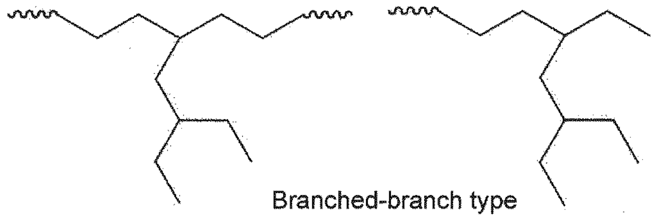

Branched-branch type

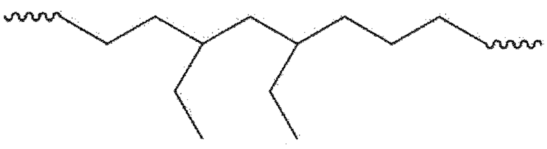

Chained type

The numbers of branches per 1,000 carbon atoms are determined by substituting any of I (B1), I (B2), and I (B4) into the term I (branches) of the formula below. B1 indicates methyl branches, B2 indicates ethyl branches, and B4 indicates butyl branches. The number of methyl branches is obtained using I (B1). The number of ethyl branches is obtained using I (B2). The number of butyl branches is obtained using I (B4).

Number of branches (branches/per 1,000 carbon atoms) = I (branches) $\times$ 1000/I --> (total)

Here, I (total), I (B1), I (B2), and I (B4) are quantities represented by the following formulas.

$$I\ (total) = I_{180.0\text{-}135.0} + I_{120.0\text{-}5.0}$$

$$I\ (B1) = (I_{20.0\text{-}19.8} + I_{33.2\text{-}33.1} + I_{37.5\text{-}37.3})/4$$

$$I\ (B2) = I_{8.6\text{-}7.6} + I_{11.8\text{-}10.5}$$

$$I\ (B4) = I_{14.3\text{-}13.7} - I_{32.2\text{-}32.0}$$

Here, I indicates integral intensity, and the subscript suffixes for I indicate the range of chemical shift; for example, $I_{180.0\text{-}135.0}$ indicates the integral intensity of a $^{13}C$ signal detected between 180.0 ppm and 135.0 ppm.

The assignment was made with reference to non-patent literature, Macromolecules 1984, 17, 1756-1761 and Macromolecules 1979, 12, 41.

When the number of any branches is shown with an inequality sign as "< 0.1", such branches are present as constituent units in the copolymer but the amount thereof is less than 0.1 mol% considering the significant figures. Furthermore, "not detected" means below the detection limit.

(6) Infrared absorption spectrum

A sample was melted at 180°C for 3 minutes and was compression molded to give a film having a thickness of about 50 μm. The film was analyzed by Fourier transform infrared spectroscopy, and an infrared absorption spectrum was obtained.

Product name: FT/IR-6100 manufactured by JASCO Corporation
Measurement technique: transmission method
Detector: TGS (triglycine sulfate)
Number of scans: 16 to 512
Resolution: 4.0 $cm^{-1}$
Measurement wavelengths: 5000 to 500 $cm^{-1}$

(7) Tensile test

A sample was formed into a 1 mm thick sheet by the method (cooling method A) described in JIS K7151 (1995). The sheet was punched to give a type 5B small test piece described in JIS K7162 (1994). The test piece was subjected to a tensile test at a temperature of 23°C in accordance with JIS K7161 (1994) to measure the tensile elastic modulus, the tensile failure stress, and the tensile failure elongation. The testing rate was 10 mm/min.

(8) Tensile impact strength

1) Method for fabrication of tensile impact strength test specimen

A sample was placed in a 1 mm thick hot press mold, was preheated in a hot press machine having a surface temperature of 180°C for 5 minutes, and was pressurized and depressurized repeatedly. In this manner, the sample was melted and the residual gas in the sample was removed. Furthermore, the sample was pressurized at 4.9 MPa and was held for 5 minutes. While applying a pressure of 4.9 MPa, the sample was gradually cooled at a rate of 10°C/min. When the temperature decreased to near room temperature, the molded sheet was taken out from the mold. The molded sheet obtained was conditioned for at least 48 hours in an environment at a temperature of 23 ± 2°C and a humidity of 50 ± 5%. The conditioned pressed sheet was punched to give an ASTM D1822 Type-S test piece as a tensile impact strength test specimen.

2) Tensile impact strength test conditions

The test piece was tested with reference to Method B of JIS K7160-1996 to measure the tensile impact strength. The measurement conditions conformed to JIS K7160-1996 except that the shape of the test piece was different from JIS K7160-1996.

(9) Aluminum (Al) bond strength

A pressed sheet of a sample was superposed on an aluminum sheet, and the unit was hot pressed to give a stack. The stack was subjected to a peel test to measure the aluminum (Al) bond strength. The methods for preparing the pressed sheet and the stack, and the method for measuring the bond strength will be sequentially described.

1) Method for preparing the pressed sheet of the sample

The sample was placed into a hot press mold with dimensions: 50 mm × 60 mm and a thickness of 0.5 mm, was preheated in a hot press machine having a surface temperature of 180°C for 5 minutes, and was pressurized and depressurized repeatedly. In this manner, the residual gas in the sample was removed. Furthermore, the sample was pressurized at 4.9 MPa and was held for 3 minutes. Subsequently, the sample was transferred to a press machine having a surface temperature of 25°C and was cooled by being held at a pressure of 4.9 MPa for 3 minutes. A pressed sheet having a thickness of about 0.5 mm was thus fabricated.

2) Method for preparing the stack of the sample and an aluminum (Al) sheet

The pressed sheet of the sample obtained by the press sheet fabrication method was provided. A commercially available 50 μm thick aluminum sheet (manufactured by UACJ Corporation, 1N30_H18_B1-1 (1N30 standard, hard

double-sided gloss finish)) was cut into a size of 50 mm × 60 mm. The surface of the sample pressed sheet and the surface of the aluminum sheet were wiped with a cloth impregnated with ethanol. The sample pressed sheet was superposed on the aluminum sheet so that their wiped sides would face each other. The unit was placed into a hot press mold with dimensions: 50 mm × 60 mm and a thickness of 0.5 mm and was pressurized at 4.9 MPa in a hot press machine having a surface temperature of 180°C for 5 minutes. Subsequently, the unit was transferred to a press machine having a surface temperature of 25°C and was cooled by being held at a pressure of 4.9 MPa for 3 minutes. A stack of the sample pressed sheet and the aluminum sheet was thus fabricated.

3) Method for measuring the bond strength of the stack

The stack obtained by the stack fabrication method was cut to 10 mm width and was tested on tensile tester Tensilon (manufactured by Toyo Seiki Seisaku-sho, Ltd.) at a rate of 50 mm/min to measure the T-peel bond strength. The bond strength was expressed with the unit N/10 mm. When the bond strength is very high, the sample layer or the substrate layer will yield or even break during the peel test. This phenomenon occurs because the bond strength of the stack is higher than the tensile failure strength of the sample layer or that of the substrate layer, whichever is lower, and can be understood as indicating extremely high adhesion. When the bond strength could not be measured due to the occurrence of this phenomenon, the bond strength was written as "not peeled" in the bond strength measurement results and was judged to be higher than the values of bond strength actually measured.

<Synthesis of metal complexes>

(1) Synthesis of B-27DM/Ni complex

B-27DM/Ni complex was synthesized using 2-bis(2,6-dimethoxyphenyl)phosphano-6-pentafluorophenylphenol ligand (B-27DM) illustrated below in accordance with Synthesis Example 4 described in WO 2010/050256. The reaction was performed using bis(1,5-cyclooctadiene)nickel (0) (written as Ni(COD)2) in accordance with Example 1 of WO 2010/050256, and nickel complex (B-27DM/Ni) was synthesized by 1:1 reaction of B-27DM and Ni(COD)2.

[Chem. 9]

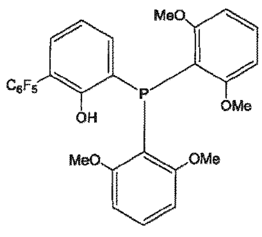

B-27DM

(2) Synthesis of B-423/Ni complex

B-423/Ni complex was synthesized using 2-bis(2,6-dimethoxyphenyl)phosphano-6-(2,6-diisopropylphenyl) phenol ligand (B-423) illustrated below in accordance with Synthesis Example 1 described in Japanese Patent Application Kokai Publication No. 2019-156764. The reaction was performed using bis(1,5-cyclooctadiene)nickel (0) (written as Ni(COD)2) in accordance with Example 1 of Japanese Patent No. 2019/156764, and nickel complex (B-423/Ni) was synthesized by 1:1 reaction of B-423 and Ni(COD)2.

[Chem. 10]

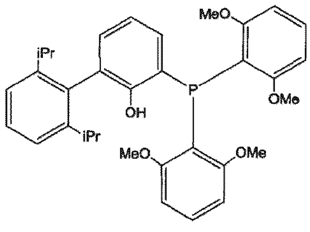

B-423

<(Production Example 1 to Production Example 7): Production of ionomer base resin precursors>

An ethylene/tBu acrylate copolymer, an ethylene/tBu acrylate/acrylic acid ester copolymer, or an ethylene/tBu acrylate/norbornene copolymer was produced using the transition metal complex (the B-27DM/Ni complex or the B-423/Ni complex). The copolymers in Production Examples 1 to 3 and Production Examples 5 to 7 were produced with reference to Production Example 1 described in Japanese Patent Application Kokai Publication No. 2016-79408. The copolymer in Production Example 4 was produced with reference to Production Example 3 described in Japanese Patent Application Kokai Publication No. 2016-79408. The production conditions were appropriately changed, such as the type of the metal complex, the amount of the metal complex, the amounts of aluminum compounds (trioctylaluminum (TNOA) and triisopropoxyaluminum ($Al(OiPr)_3$)), the amount of toluene, the types of comonomers, the amounts of comonomers, the ethylene partial pressure, the polymerization temperature, and the polymerization time. The production conditions and the production results are described in Tables 1 and 2, and properties of the copolymers obtained are described in Table 3.

[Table 1]

| | Metal complex | Amount of metal complex | Aluminum compounds | | oluene | Comonomer 1 | Comonomer 2 | Comonomer 1 | Comonomer 2 | Polymerization conditions | | | Yield | Catalytic efficiency |
|---|---|---|---|---|---|---|---|---|---|---|---|---|---|---|
| | | | Trioctylaluminum (TNOA) | Triisopropoxyaluminum ($Al(OiPr)_3$) | | | | Conc. | Conc. | Ethylene partial pressure | Temp. | Time | | |
| | | mmol | mmol | mmol | L | | | mmol/L | mmol/L | MPa | °C | min | g | g/mol |
| Prod. Ex.1 | B-423/Ni | 500 | 410 | - | 750 | t-Butyl acrylate | - | 201 | - | 0.7 | 105 | 410 | 131000 | 2.6E+05 |
| Prod. Ex.2 | B-27DM/Ni | 740 | 520 | - | 750 | t-Butyl acrylate | - | 224 | - | 0.7 | 98 | 300 | 89800 | 1.2E+05 |
| Prod. Ex.3 | B-423/Ni | 550 | 682 | - | 1000 | t-Butyl acrylate | - | 139 | - | 0.7 | 110 | 420 | 104000 | 1.9E+05 |
| Prod. Ex.5 | B-27DM/Ni | 178 | - | 58 | 135 | t-Butyl acrylate | - | 520 | - | 0.7 | 80 | 335 | 29650 | 1.7E+05 |
| Prod. Ex.6 | B-27DM/Ni | 1000 | 225 | - | 1000 | t-Butyl acrylate | 2-Norbomane | 230 | 210 | 0.8 | 85 | 330 | 117000 | 1.2E+05 |
| Prod. Ex.7 | B-423/Ni | 1460 | 3573 | - | 1000 | t-Butyl acrylate | i-Butyl acrylate | 147 | 66 | 0.8 | 95 | 510 | 75000 | 5.1E+04 |

[Table 2]

| | Metal complex | Amount of metal complex | Aluminum compound | Comonomer 1 | Ethylene | Comonomer1 | Polymerization conditions | | | Yield | Catalytic efficiency |
|---|---|---|---|---|---|---|---|---|---|---|---|
| | | | Trioctylaluminum (TNOA) | | | | Pressure | Temp. | Time | | |
| | | μmol/hr | mmol/hr | | mol/hr | mol/hr | MPa | °C | min | g | g/ (mol · hr) |
| Prod. Ex.4 | B-27DM/Ni | 634 | 14 | t-Butyl acrylate | 1790 | 9 | 80 | 130 | 60 | 1290 | 2.0E+06 |

[Table 3]

| | Comonomer 1 | Comonomer 2 | Comonomer 1 | Comonomer 2 | Melting point | Degree of crystallinity | Weight average molecular weight | Molecular weight distribution parameter | Number of methyl branches | Number of ethyl branches | Number of butyl branches |
|---|---|---|---|---|---|---|---|---|---|---|---|
| | | | Content | Content | Tm | | | | Branches/ 1000 C | Branches/ 1000 C | Branches/ 1000 C |
| | | | mol% | mol% | °C | % | $Mw*10^{-4}$ | Mw/Mn | | | |
| Prod. Ex.1 | t-Butyl acrylate | - | 3.3 | - | 104.8 | 35 | 3.3 | 2.4 | 1.7 | 0.1 | not detected |
| Prod. Ex.2 | t-Butyl acrylate | - | 5.0 | - | 97.5 | 26 | 2.2 | 3.7 | 1.1 | not detected | not detected |
| Prod. Ex.3 | t-Butyl acrylate | - | 3.5 | - | 104.2 | 33 | 2.6 | 2.4 | 2.0 | 0.1 | not detected |
| Prod. Ex.4 | t-Butyl acrylate | - | 0.6 | - | 123.4 | 60 | 4.3 | 2.3 | 1.9 | not detected | not detected |
| Prod. Ex.5 | t-Butyl acrylate | - | 7.7 | - | 85.7 | 14 | 3.2 | 2.6 | 0.5 | not detected | not detected |
| Prod. Ex.6 | t-Butyl acrylate | 2-Norbomene | 5.1 | 2.9 | 80.5 | 15 | 3.2 | 2.3 | 0.5 | not detected | not detected |
| Prod. Ex.7 | t-Butyl acrylate | i-Butyl acrylate | 5.4 | 2.3 | 80.5 | 12 | 2.4 | 2.9 | not detected | not detected | not detected |

<(Resin 1 to resin 4 and resin 7 to resin 9): Production of ionomer base resins>

A 500 mL separable flask was charged with 40 g of the copolymer obtained in any of Production Examples 1 to 4 and Production Examples 5 to 7, 0.8 g of p-toluenesulfonic acid monohydrate, and 185 mL of toluene. The mixture was stirred at 105°C for 4 hours. 185 mL of ion-exchanged water was added, and the mixture was stirred and was allowed to stand. The aqueous layer was withdrawn. Ion-exchanged water was further added and withdrawn repeatedly until the pH of the aqueous layer withdrawn became 5 or more. The solution that remained was distilled under reduced pressure to remove the solvent, and the residue was dried to a constant weight.

The IR spectrum of the resultant resin showed the disappearance of the peak around 850 $cm^{-1}$ assigned to the tBu group, a decrease in the peak around 1730 $cm^{-1}$ assigned to the carbonyl group in the ester, and an increase in the peak around 1700 $cm^{-1}$ assigned to the carbonyl group in the carboxylic acid (dimer).

The above results confirmed the decomposition of t-Bu ester and the occurrence of the carboxylic acid. Ionomer base resins 1 to 4 and 7 to 9 were thus obtained. Properties of the resins obtained are described in Table 4.

<(Resin 5): Ionomer base resin>

An acid copolymer (product name: PRIMACOR 3440, manufactured by SK Chemical Co., Ltd.) was used as an ionomer base resin. This copolymer is an ethylene/acrylic acid copolymer produced by a high-pressure radical process. Properties are described in Table 4.

<(Resin 6): Ionomer base resin>

An acid copolymer (product name: NUCREL 1108C, manufactured by DOW-MITSUI POLYCHEMICALS CO., LTD.) was used as an ionomer base resin. This copolymer is an ethylene/methacrylic acid copolymer produced by a high-pressure radical process. Properties are described in Table 4.

[Table 4]

| Base resin | Base resin precursor | Composition of resin | MFR | Melting point | Degree of crystallinity | Structural unit content [Z] | -3.74×[Z] + 130 | Phase angle | Number of methyl branches | Number of ethyl branches | Number of butyl branches |
|---|---|---|---|---|---|---|---|---|---|---|---|
| | | A/B | 190deg 2.16kg | Tm | | [B] | | δ (G*=D.1MPa) | | | |
| | | mol/mol | g/10min | °C | % | mol% | | ° | Branches/ 1000 C | Branches/ 1000 C | Branches/ 1000 C |
| Resin 1 | Prod. Ex.1 | E/AA=96.7/3.3 | 19 | 109 | 38 | 3.3 | 118 | 60 | 1.7 | 0.1 | not detected |
| Resin 2 | Prod. Ex.2 | E/AA=95.0/5.0 | 56 | 102 | 32 | 5.0 | 111 | 55 | 1.1 | not detected | not detected |
| Resin 3 | Prod. Ex.3 | E/AA=96.7/3.5 | 47 | 108 | 41 | 3.5 | 117 | 57 | 2.0 | 0.1 | not detected |
| Resin 4 | Prod. Ex.4 | E/AA=99.4/0.6 | 22 | 125 | 63 | 0.6 | 128 | 61 | 1.0 | not detected | not detected |
| Resin 5 | - | E/AA=96.0/4.0 | 11.0 | 97 | 29 | 4.0 | 115 | 40 | not detected | 3.5 | 9.9 |
| Resin 6 | - | E/MAA=96.1/3.9 | 8.0 | 97 | 26 | 3.9 | 115 | 40 | not detected | 6.1 | 8.9 |
| Resin 7 | Prod. Ex.5 | E/AA=92.3/7.7 | 11 | 91 | 23 | 7.7 | 101 | 63 | 0.5 | not detected | not detected |
| Resin 8 | Prod. Ex.6 | E/AA/NB=92.0/5.1/2.9 | 17 | 84 | 20 | 8.0 | 100 | 62 | 0.5 | not detected | not detected |
| Resin 9 | Prod. Ex.7 | E/AA/iBA=92.3/5.4/2.3 | 81 | 88 | 19 | 7.7 | 101 | 64 | not detected | not detected | not detected |

<Example 1 to Example 10 and Comparative Example 1 to Comparative Example 25: Production of ionomers>

1) Preparation of Na ion source

Labo Plastomill (manufactured by Toyo Seiki Seisaku-sho, Ltd.) equipped with a 60 mL volume small mixer, Roller Mixer R60, was charged with 22 g of ethylene/methacrylic acid (MAA) copolymer (product name: NUCREL N1050H, manufactured by DOW-MITSUI POLYCHEMICALS CO., LTD.) and 18 g of sodium carbonate. The mixture was kneaded at 180°C and 40 rpm for 3 minutes to give a Na ion source.

2) Preparation of Zn ion source

Labo Plastomill (manufactured by Toyo Seiki Seisaku-sho, Ltd.) equipped with a 60 mL volume small mixer, Roller Mixer R60, was charged with 21.8 g of ethylene/methacrylic acid (MAA) copolymer (product name: NUCREL N1050H, manufactured by DOW-MITSUI POLYCHEMICALS CO., LTD.), 18 g of zinc oxide, and 0.2 g of zinc stearate. The mixture was kneaded at 180°C and 40 rpm for 3 minutes to give a Zn ion source.

3) Preparation of Mg ion source

Labo Plastomill (manufactured by Toyo Seiki Seisaku-sho, Ltd.) equipped with a 60 mL volume small mixer, Roller Mixer R60, was charged with 21.8 g of polyethylene (product name: KS571, manufactured by JAPAN POLYETHYLENE CORPORATION), 18 g of magnesium hydroxide, and 0.2 g of magnesium stearate. The mixture was kneaded at 180°C and 40 rpm for 3 minutes to give a Mg ion source.

4) Preparation of Ca ion source

Labo Plastomill (manufactured by Toyo Seiki Seisaku-sho, Ltd.) equipped with a 60 mL volume small mixer, Roller Mixer R60, was charged with 21.8 g of polyethylene (product name: KS571, manufactured by JAPAN POLYETHYLENE CORPORATION), 18 g of calcium oxide, and 0.2 g of calcium stearate. The mixture was kneaded at 180°C and 40 rpm for 3 minutes to give a Ca ion source.

5) Preparation of ionomers

Labo Plastomill (manufactured by Toyo Seiki Seisaku-sho, Ltd.) equipped with a 60 mL volume small mixer, Roller Mixer R60, was charged with 40 g of any of the resin 1 to the resin 6. The resin was melted by being kneaded at 160°C and 40 rpm for 3 minutes. Subsequently, the Na ion source, the Zn ion source, the Mg ion source, or the Ca ion source was added so that the desired degree of neutralization would be obtained. Kneading was performed at 250°C and 40 rpm for 5 minutes.

The IR spectrum of the resultant resin showed a decrease in the peak around 1700 $cm^{-1}$ assigned to the carbonyl group in the carboxylic acid (dimer) and an increase in the peak around 1560 $cm^{-1}$ assigned to the carbonyl group in the carboxylate salt group. Based on the amount of the decrease in the peak around 1700 $cm^{-1}$ assigned to the carbonyl group in the carboxylic acid (dimer), it was confirmed that the ionomer produced had the desired degree of neutralization. Properties of the ionomers obtained are described in Table 5 to Table 8.

[Table 5]

| | Base resin | Composition of resin | Degree of neutralization | | | | Phase angle | Melting point | Degree of crystallinity | Tensile elastic modulus | Tensile failure stress | Tensile failure elongation |
|---|---|---|---|---|---|---|---|---|---|---|---|---|
| | | A/B | $2\times Mg^{2+}$/(M) AA | $2\times Ca^{2+}$/(M) AA | $Na^{+}$/(M) AA | $2\times Zn^{24}$/(M) AA | δ (G*=0.1MPa) | Tm | | | | |
| | | mol/mol | mol% | mol% | mol% | mol% | ° | °C | % | MPa | MPa | % |
| Ex. 1 | Resin 1 | E/AA=96.7/3.3 | 20 | - | - | - | 60 | 109 | 35 | 408 | 29 | 378 |
| Ex.2 | Resin 1 | E/AA=96.7/3.3 | 40 | - | - | - | 58 | 108 | 31 | 311 | 37 | 378 |
| Ex.3 | Resin 1 | E/AA=96.7/3.3 | 60 | - | - | - | 56 | 105 | 20 | 171 | 45 | 306 |
| Ex.4 | Resin 2 | E/AA=95.0/5.0 | 20 | - | - | - | 55 | 102 | 30 | 419 | 26 | 266 |
| Ex.5 | Resin 2 | E/AA=95.0/5.0 | 40 | - | - | - | 55 | 100 | 22 | 285 | 37 | 288 |
| Ex.6 | Resin 2 | E/AA=95.0/5.0 | 60 | - | - | - | 54 | 96 | 10 | 169 | 50 | 252 |
| Ex.7 | Resin 3 | E/AA=96.7/3.5 | - | 60 | - | - | 57 | 105 | 21 | 238 | 35 | 267 |
| Ex.8 | Resin 7 | E/AA=92.3/7.7 | 20 | - | - | - | 61 | 91 | 18 | 284 | 52 | 313 |
| Ex.9 | Resin 8 | E/AA/NB=92.0/5.1/2.9 | 30 | - | - | - | 60 | 83 | 14 | 170 | 51 | 361 |
| Ex.10 | Resin 9 | E/AA/IBA=92.3/5.4/2.3 | 45 | - | - | - | 55 | 81 | 11 | 127 | 44 | 302 |

[Table 6]

| | Base resin | Composition of resin | Degree of neutralization | | | | Fluidity | Impact resistance | Adhesion |
|---|---|---|---|---|---|---|---|---|---|
| | | A/B | 2×$Mg^{2+}$/(M)AA | 2×$Ca^{a+}$/(M)AA | $Na^{+}$/(M)AA | 2×$Zn^{2+}$/(M)AA | MFR | Tensile impact strength | Al bond strength |
| | | mol/mol | mol% | mol% | mol% | mol% | g/10min | kJ/$m^2$ | N/10mm |
| Ex.1 | Resin 1 | E/AA=96.7/3.3 | 20 | - | - | - | 5.6 | 453 | 3.3 |
| Ex.2 | Resin 1 | E/AA=96.7/3.3 | 40 | - | - | - | 1.5 | 1220 | 4.4 |
| Ex.3 | Resin 1 | E/AA=96.7/3.3 | 60 | - | - | - | 0.4 | 2000 | 5.1 |
| Ex.4 | Resin 2 | E/AA=95.0/5.0 | 20 | - | - | - | 14.1 | 341 | 1.6 |
| Ex.5 | Resin 2 | E/AA=95.0/5.0 | 40 | - | - | - | 3.1 | 900 | 2.3 |
| Ex.6 | Resin 2 | E/AA=95.0/5.0 | 60 | - | - | - | 0.6 | 1300 | 3.1 |
| Ex.7 | Resin 3 | E/AA=96.7/3.5 | - | 60 | - | - | 0.6 | 1713 | 3.0 |
| Ex.8 | Resin 7 | E/AA=92.3/7.7 | 20 | - | - | - | 1.6 | 1130 | 4.4 |
| Ex.9 | Resin 8 | E/AA/NB=92.0/5.1/2.9 | 30 | - | - | - | 1.4 | 1538 | 5.6 |
| Ex.10 | Resin 9 | E/AA/iBA=92.3/5.4/2.3 | 45 | - | - | - | 3.0 | 1051 | 7.8 |

[Table 7]

| | Base resin | Composition of resin | Degree of neutralization | | | | Phase angle | Melting point | Degree crystallinity | Tensile elastic modulus | Tensile failure stress | Tensile failure elongation |
|---|---|---|---|---|---|---|---|---|---|---|---|---|
| | | A/B | 2×$Mg^{2+}$/(M)AA | 2×$Ca^{2+}$/(M)AA | $Na^{+}$/(M)AA | 2×$Zn^{2+}$/(M)AA | δ (G*=0.1MPa) | Tm | | | | |
| | | mol/mol | mol% | mol% | mol% | mol% | ° | °C | % | MPa | MPa | % |
| Comp. Ex.1 | Resin 5 | E/AA=96.0/4.0 | 40 | - | - | - | 40 | 96 | 21 | 157 | 35 | 317 |
| Comp. Ex.2 | Resin 5 | E/AA=96.0/4.0 | 60 | - | - | - | 41 | 92 | 12 | 107 | 40 | 275 |
| Comp. Ex.3 | Resin 6 | E/MAA=96.1/3.9 | 60 | - | - | - | 41 | 94 | 16 | 124 | 39 | 289 |
| Comp. Ex.4 | Resin 1 | E/AA=96.7/3.3 | - | - | 20 | - | 60 | 109 | 37 | 419 | 26 | 363 |
| Comp. Ex.5 | Resin 1 | E/AA=96.7/3.3 | - | - | 40 | - | 59 | 108 | 33 | 347 | 35 | 383 |
| Comp. Ex.6 | Resin 1 | E/AA=96.7/3.3 | - | - | 60 | - | 57 | 106 | 25 | 218 | 43 | 352 |
| Comp. Ex.7 | Resin 1 | E/AA=96.7/3.3 | - | - | - | 20 | 59 | 108 | 37 | 311 | 25 | 375 |
| Comp. Ex.8 | Resin 1 | E/AA=96.7/3.3 | - | - | - | 40 | 57 | 108 | 33 | 296 | 31 | 340 |
| Comp. Ex.9 | Resin 1 | E/AA=96.7/3.3 | - | - | - | 60 | 55 | 108 | 30 | 261 | 38 | 313 |
| Comp. Ex. 10 | Resin 2 | E/AA=95.0/5.0 | - | - | 20 | - | 57 | 102 | 32 | 478 | 21 | 225 |
| Comp. Ex. 11 | Resin 2 | E/AA=95.0/5.0 | - | - | 40 | - | 57 | 101 | 24 | 321 | 29 | 238 |
| Comp. Ex.12 | Resin 2 | E/AA=95.0/5.0 | - | - | 60 | - | 56 | 99 | 18 | 220 | 45 | 291 |
| Comp. Ex.13 | Resin 2 | E/AA=95.0/5.0 | - | - | - | 20 | 56 | 101 | 31 | 343 | 24 | 307 |
| Comp. Ex. 14 | Resin 2 | E/AA=95.0/5.0 | - | - | - | 40 | 56 | 101 | 27 | 323 | 32 | 294 |

(continued)

| | Base resin | Composition of resin | Degree of neutralization | | | | Phase angle | Melting point | Degree crystallinity | Tensile elastic modulus | Tensile failure stress | Tensile failure elongation |
|---|---|---|---|---|---|---|---|---|---|---|---|---|
| | | A/B | $2\times Mg^{2+}$/(M)AA | $2\times Ca^{2+}$/(M)AA | $Na^{+}$/(M)AA | $2\times Zn^{2+}$/(M)AA | δ (G*=0.1MPa) | Tm | | | | |
| | | mol/mol | mol% | mol% | mol% | mol% | ° | °C | % | MPa | MPa | % |
| Comp. Ex.15 | Resin 2 | E/AA=95.0/5.0 | - | - | - | 60 | 54 | 100 | 20 | 275 | 46 | 271 |
| Comp. Ex.16 | Resin 3 | E/AA=96.7/3.5 | - | - | 60 | - | 56 | 105 | 26 | 195 | 32 | 303 |
| Comp. Ex. 17 | Resin 3 | E/AA=96.7/3.5 | - | - | - | 60 | 55 | 107 | 28 | 271 | 33 | 305 |
| Comp. Ex.18 | Resin 4 | E/AA=99.4/0.6 | 60 | - | - | - | 58 | 125 | 51 | 608 | 5 | 133 |
| Comp. Ex.19 | Resin 1 | E/AA=96.7/3.3 | 95 | - | - | - | 54 | no data | 15 | no data | no data | no data |
| Comp. Ex.20 | Resin 7 | E/AA=92.3/7.7 | - | - | 20 | - | 61 | 93 | 23 | 379 | 48 | 336 |
| Comp. Ex.21 | Resin 7 | E/AR=92.3/7.7 | - | - | - | 20 | 60 | 91 | 20 | 229 | 49 | 383 |
| Comp. Ex.22 | Resin 8 | E/AA/NB=92.0/5.1/2.9 | - | - | 30 | - | 61 | 85 | 15 | 215 | 51 | 354 |
| Comp. Ex.23 | Resin 8 | E/AA/NB=92.0/5.1/2.9 | - | - | - | 30 | 58 | 84 | 12 | 123 | 51 | 386 |
| Comp. Ex.24 | Resin 9 | E/AA/iBA=92.3/5.4/2.3 | - | - | 45 | - | 55 | 86 | 16 | 113 | 42 | 424 |
| Comp. Ex.25 | Resin 9 | E/AA/iBA=92.3/5.4/2.3 | - | - | - | 45 | 55 | 83 | 15 | 93 | 38 | 408 |

[Table 8]

| | Base resin | Composition of resin | Degree of neutralization | | | | Fluidity | Impact resistance | Adhesion |
|---|---|---|---|---|---|---|---|---|---|
| | | A/B | $2\times Mg^{2+}$/(M)AA | $2\times Ca^{24}$/(M)AA | $Na^{+}$ /(M)AA | $2\times Zo^{2+}$/(M)AA | MFR | Tensile mpact strength | Al bond strength |
| | | mol/mol | mol% | mol% | mol% | mol% | g/10min | kJ/m$^2$ | N/10mm |
| Comp. Ex.1 | Resin 5 | E/AA=96.0/4.0 | 40 | - | - | - | 1.1 | 781 | 1.5 |
| Comp. Ex.2 | Resin 5 | E/AA=96.0/4.0 | 60 | - | - | - | 0.3 | 697 | 1.9 |
| Comp. Ex.3 | Resin 6 | E/MAA=96.1/3.9 | 60 | - | - | - | 0.3 | 732 | 1.9 |
| Comp. Ex.4 | Resin 1 | E/AA=96.7/3.3 | - | - | 20 | - | 6.5 | 262 | 1.8 |
| Comp. Ex.5 | Resin 1 | E/AA=96.7/3.3 | - | - | 40 | - | 1.7 | 885 | 3.1 |
| Comp. Ex.6 | Resin 1 | E/AA=96.7/3.3 | - | - | 60 | - | 0.4 | 1672 | 2.1 |
| Comp. Ex.7 | Resin 1 | E/AA=96.7/3.3 | - | - | - | 20 | 4.3 | 352 | 3.0 |
| Comp. Ex.8 | Resin 1 | E/AA=96.7/3.3 | - | - | - | 40 | 0.8 | 1050 | 4.0 |
| Comp. Ex.9 | Resin 1 | E/AA=96.7/3.3 | - | - | - | 60 | 0.2 | 1793 | 3.7 |
| Comp. Ex.10 | Resin 2 | E/AA=95.0/5.0 | - | - | 20 | - | 21.2 | 207 | 1.1 |
| Comp. Ex.11 | Resin 2 | E/AA=95.0/5.0 | - | - | 40 | - | 4.2 | 619 | 1.6 |
| Comp. Ex.12 | Resin 2 | E/AA=95.0/5.0 | - | - | 60 | - | 0.8 | 1100 | 2.4 |
| Comp. Ex.13 | Resin 2 | E/AA=95.0/5.0 | - | - | - | 20 | 7.1 | 271 | 1.4 |
| Comp. Ex.14 | Resin 2 | E/AA=95.0/5.0 | - | - | - | 40 | 1.0 | 700 | 2.1 |
| Comp. Ex.15 | Resin 2 | E/AA=95.0/5.0 | - | - | - | 60 | 0.1 | 1152 | 1.8 |
| Comp. Ex.16 | Resin 3 | E/AA=96.7/3.5 | - | - | 60 | - | 1.0 | 754 | 1.5 |
| Comp. Ex.17 | Resin 3 | E/AA=96.7/3.5 | - | - | - | 60 | 0.3 | 1512 | 2.5 |
| Comp. Ex.18 | Resin 4 | E/AA=99.4/0.6 | 60 | - | - | - | 5.1 | 88 | 0.2 |
| Comp. Ex.19 | Resin 1 | E/AA=96.7/3.3 | 95 | - | - | - | <0.01 | no data | 0.2 |
| Comp. Ex.20 | Resin 7 | E/AA=92.3/7.7 | - | - | 20 | | 2.4 | 649 | 1.7 |
| Comp. Ex.21 | Resin 7 | E/AA=92.3/7.7 | - | - | - | 20 | 1.0 | 1050 | 3.8 |
| Comp. Ex.22 | Resin 8 | E/AA/NB=92.0/5.1/2.9 | - | - | 30 | - | 1.3 | 1301 | 2.7 |
| Comp. Ex.23 | Resin 8 | E/AA/NB=92.0/5.12.2 | - | - | - | 30 | 0.7 | 1418 | 4.8 |
| Comp. Ex.24 | Resin 9 | E/AA/iBA=92.3/5.4/2.3 | - | - | 45 | - | 3.5 | 793 | 3.8 |

(continued)

| | Base resin | Composition of resin | Degree of neutralization | | | | Fluidity | Impact resistance | Adhesion |
|---|---|---|---|---|---|---|---|---|---|
| | | A/B | $2\times Mg^{2+}$/(M) AA | $2\times Ca^{24}$/(M) AA | $Na^{+}$ /(M) AA | $2\times Zo^{2+}$/(M) AA | MFR | Tensile mpact strength | Al bond strength |
| | | mol/mol | mol% | mol% | mol% | mol% | g/10min | $kJ/m^2$ | N/10mm |
| Comp. Ex.25 | Resin 9 | E/AA/iBA=92.3/5.4/2.3 | - | - | - | 45 | 0.9 | 829 | 6.9 |

<Discussion of the results of Examples and Comparative Examples>

[Comparison of the ionomers of the present invention to the conventional ionomers]

The ionomers of Examples 2 and 3 in Table 6 are composed of a base resin produced with a specific transition metal catalyst, and a metal ion source. Thus, their molecular structures are substantially linear, and the phase angle δ (G* = 0.1 MPa) is 50° or more. On the other hand, the ionomers of Comparative Examples 1 to 3 in Table 8 are conventional ionomers composed of a base resin produced by a high-pressure radical process, and a metal ion source. Thus, their molecular structures have many long-chain branches, and the phase angle δ (phase angle δ (G* = 0.1 MPa)) when the absolute value G* of complex elastic modulus was 0.1 MPa was less than 50°.
Example 2 is similar to Comparative Example 1, and Example 3 is similar to Comparative Example 2 and Comparative Example 3 in terms of the content of the structural units (B), the type of the metal, and the degree of neutralization. Therefore, these examples bear direct comparison and evaluation. The comparison will be given below.
The inventive ionomers of Examples 2 and 3 and the conventional ionomers of Comparative Examples 1 to 3 have similar MFR values (fluidity), but the ionomers of Examples 2 and 3 achieved markedly high tensile impact values and aluminum bond strength compared to the ionomers of Comparative Examples 1 to 3. That is, the inventive ionomers of Examples 2 and 3 outperform the conventional ionomers of Comparative Examples 1, 2, and 3 in terms of impact resistance and adhesion.
The above results show that the linear ionomers of the present invention that have a phase angle δ (G* = 0.1 MPa) of 50° or more excel in the balance among fluidity, impact resistance, and adhesion relative to the conventional hyperbranched ionomers.

[Discussion about the type of metal ions in the ionomers according to the present invention]

The ionomers of Examples 1 to 10 in Table 6 are ionomers composed of a base resin produced with a specific transition metal catalyst, and a Group 2 metal in the periodic table. On the other hand, the ionomers of Comparative Examples 4 to 17 and Comparative Examples 20 to 25 in Table 8 are conventional ionomers composed of a base resin produced with a specific transition metal catalyst, and a Group 1 or 12 metal in the periodic table.
The ionomers of Examples 1 to 3 and Comparative Examples 4 to 9; of Examples 4 to 6 and Comparative Examples 10 to 15; of Example 7 and Comparative Examples 16 and 17; of Example 8 and Comparative Examples 20 and 21; of Example 9 and Comparative Examples 22 and 23; and of Example 10 and Comparative Examples 24 and 25 are each identical to one another in the type of the base resin and different from one another in the type of the metal ion. Those ionomers having similar degrees of neutralization bear direct comparison and evaluation. The comparison will be given below.
Compared to the sodium ionomers (Na-IO) of Comparative Examples 4 to 6, the magnesium ionomers (Mg-IO) of Examples 1 to 3 have similar MFR values (fluidity) but exhibited higher tensile impact values and markedly high Al bond strength. On the other hand, these magnesium ionomers as compared to the zinc ionomers (Zn-IO) of Comparative Examples 7 to 9 had high MFR values, indicating good fluidity, and were also excellent in tensile impact value and Al bond strength.
The above discussion also applies to the comparison of Examples 4 to 6, Example 8, Example 9, and Example 10 (Mg-IO) to Comparative Examples 10 to 12, Comparative Example 20, Comparative Example 22, Comparative Example 24 (Na-IO), Comparative Examples 13 to 15, Comparative Example 21, Comparative Example 23, and Comparative Example 25 (Zn-IO), and to the comparison of Example 7 (calcium ionomer (Ca-IO)) to Comparative Example 16 (Na-IO) and Comparative Example 17 (Zn-IO).
This shows that the periodic Group 2 ionomers of the present invention excel in the balance among fluidity, impact resistance, and adhesion relative to the periodic Group 1 or Group 12 ionomers.

[Discussion about the amount of the structural units (B) in the copolymer (P) and the degree of neutralization of the ionomers in the present invention]

In Examples 1 to 10 described in Table 6, the amount of the structural units (B) in the copolymer (P) and the degree of neutralization of the ionomer were in the ranges of the present invention. These examples attained excellent results in MFR value (fluidity), tensile impact value (impact resistance), and Al bond strength (adhesion).
In contrast, referring to Table 8, the amount of the structural units (B) in the copolymer (P) in Comparative Example 18 was as low as 0.6 mol% and was outside the range of the present invention. Consequently, the tensile impact value and the Al bond strength were markedly low.
Furthermore, the degree of neutralization of the ionomer of Comparative Example 19 was as high as 95 mol% and was outside the range of the present invention. Consequently, the MFR value and the Al bond strength were markedly

low.

That is, Comparative Example 18 and Comparative Example 19 failed to achieve a good balance among fluidity, impact resistance, and adhesion.

The above results show that the ionomers of the present invention exhibit well balanced fluidity, impact resistance, and adhesion by virtue of the ionomer having the specific amount of the structural units (B) in the copolymer (P) and the specific degree of ionomer neutralization.

It is probable that the outstanding performance of the periodic Group 2 ionomers of the subject application in fluidity, impact resistance, and adhesion over the periodic Group 1 ionomers or the periodic Group 12 ionomers largely owes to the influence of the valence and the electronegativity of the metal ion.

The valence of the ions of the Group 2 metals and the Group 12 metals in the periodic table are divalent, and the valence of the ions of the Group 1 metals in the periodic table is monovalent. A metal ion having a larger valence accepts more polymer chains that are ionic bonded to the metal ion, and therefore probably serves as a stronger crosslinking point and increases the material strength of the polymer. This is probably the reason why the periodic Group 2 and Group 12 ionomers having a larger valence of the metal ion achieved excellent impact resistance compared to the periodic Group 1 ionomers.

On the other hand, the ions of the Group 2 metals in the periodic table and of the Group 1 metals in the periodic table have lower electronegativity than the ions of the Group 12 metals in the periodic table. In general, ionomers, which are ionically crosslinked resins, easily undergo recombination of metal-carboxylic acid bonds when heated, thus exhibiting fluidity. The fluidity of the ionomer will be enhanced with decreasing electronegativity of the metal ion because the metal-carboxylic acid bonds are more ionic and the recombination of metal-carboxylic acid bonds occurs more easily upon heating. It is thus probable that the periodic Group 2 or Group 1 ionomers having small electronegativity will exhibit higher fluidity than the periodic Group 12 ionomers.

The bond strength is evaluated based on a numerical value measured by a peel test, such as one illustrated in JIS K6854-1 to 4 (1999) "Adhesives - Determination of peel strength of bonded assemblies". The numerical value measured by this method is considered to be the sum of the chemical and physical bonding forces at the interface between the dissimilar materials, and the cohesive force of the material or the stress that occurs during deformation, and will be greatly influenced by the material strength. This is probably the reason why the periodic Group 2 or Group 12 ionomers having high material strength as described above attained excellent adhesion compared to the periodic Group 1 ionomers.

From the foregoing, the periodic Group 2 ionomers of the present invention contain metal ions with a high valence and low electronegativity and thus excel in the balance among fluidity, impact resistance, and adhesion.

The present invention pertains to ionomers described in each of the following items.

[1] An ionomer comprising a neutralization product of a copolymer (P) comprising, as essential constituent units, structural units (A) derived from ethylene and/or a C3-C20 $\alpha$-olefin and structural units (B) derived from a monomer having a carboxyl group and/or a dicarboxylic acid anhydride group, the proportion of the structural units (B) being 1 to 20 mol%, the ionomer being such that at least part of the carboxyl groups and/or the dicarboxylic acid anhydride groups in the copolymer (P) are converted to a metal-containing carboxylate salt containing a metal ion of at least one metal selected from Group 2 of the periodic table, the ionomer having characteristics (a) and (b) below:

(a) the phase angle $\delta$ is 50 degrees to 75 degrees when the absolute value G* of complex elastic modulus measured with a rotational rheometer is 0.1 MPa, and
(b) the degree of neutralization is 1 to 90 mol%.

[2] The ionomer according to [1], wherein the number of methyl branches calculated by $^{13}$C-NMR of the copolymer (P) is 50 or less per 1,000 carbon atoms.
[3] The ionomer according to [1] or [2], wherein the structural units (A) are structural units derived from ethylene.
[4] The ionomer according to any one of [1] to [3], wherein the metal ion is at least one or more selected from the group consisting of $Mg^{2+}$ and $Ca^{2+}$.
[5] The ionomer according to any one of [1] to [4], wherein the copolymer (P) is produced using a transition metal catalyst comprising a transition metal from Groups 8 to 11 of the periodic table.
[6] The ionomer according to [5], wherein the transition metal catalyst is a transition metal catalyst including a phosphosulfonic acid or phosphophenol ligand and nickel or palladium.

Industrial Applicability

The ionomer of the present disclosure excels in the balance among fluidity, impact resistance, and adhesion and is useful compared to the conventional ionomers.

## Claims

1. An ionomer comprising a neutralization product of a copolymer (P) comprising, as essential constituent units, structural units (A) derived from ethylene and/or a C3-C20 α-olefin and structural units (B) derived from a monomer having a carboxyl group and/or a dicarboxylic acid anhydride group, the proportion of the structural units (B) being 1 to 20 mol%, the ionomer being such that at least part of the carboxyl groups and/or the dicarboxylic acid anhydride groups in the copolymer (P) are converted to a metal-containing carboxylate salt containing a metal ion of at least one metal selected from Group 2 of the periodic table, the ionomer having characteristics (a) and (b) below:

   (a) the phase angle δ is 50 degrees to 75 degrees when the absolute value G* of complex elastic modulus measured with a rotational rheometer is 0.1 MPa, and
   (b) the degree of neutralization is 1 to 90 mol%.

2. The ionomer according to claim 1, wherein a number of methyl branches calculated by $^{13}$C-NMR of the copolymer (P) is 50 or less per 1,000 carbon atoms.

3. The ionomer according to claim 1, wherein the structural units (A) are structural units derived from ethylene.

4. The ionomer according to claim 1, wherein the metal ion is at least one or more selected from the group consisting of $Mg^{2+}$ and $Ca^{2+}$.

5. The ionomer according to any one of claims 1 to 4, wherein the copolymer (P) is produced using a transition metal catalyst comprising a transition metal from Groups 8 to 11 of the periodic table.

6. The ionomer according to claim 5, wherein the transition metal catalyst is a transition metal catalyst including a phosphosulfonic acid or phosphophenol ligand and nickel or palladium.

Fig. 1

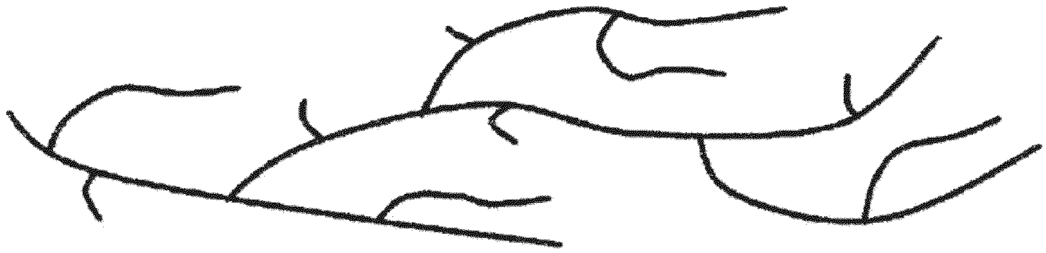

Fig. 2

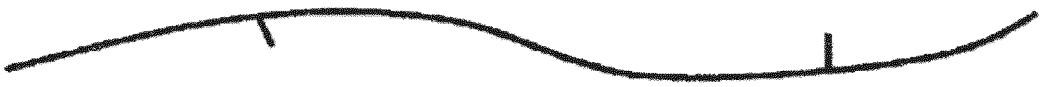

Fig. 3

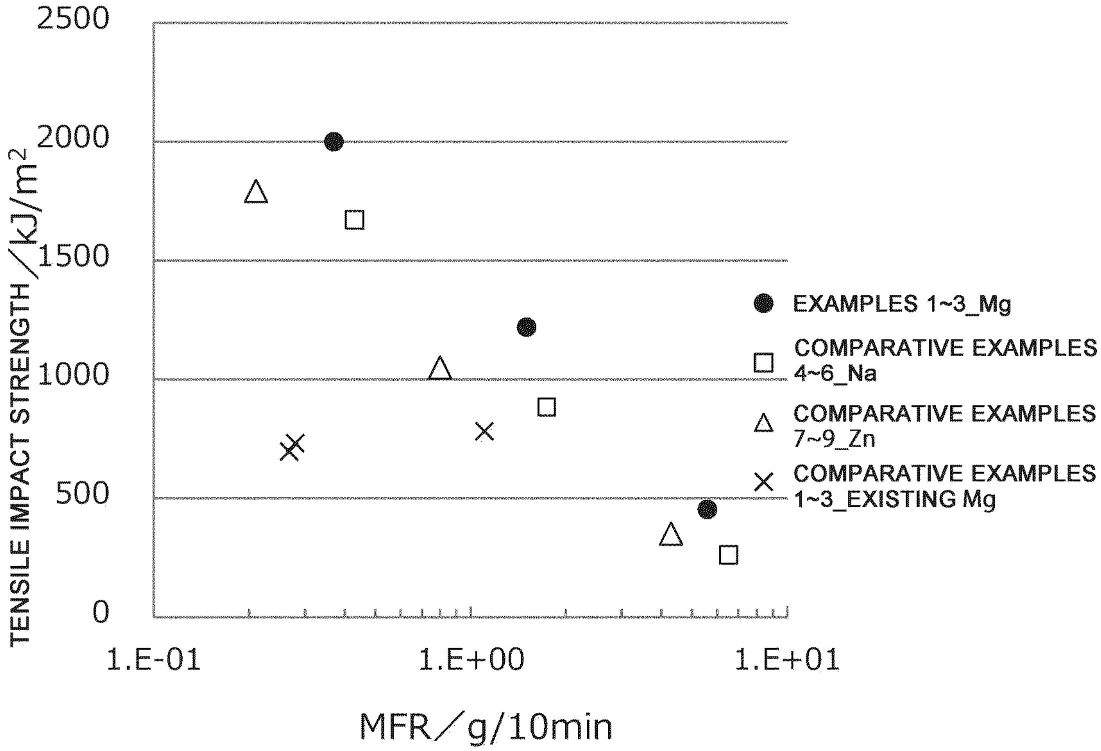

Fig. 4

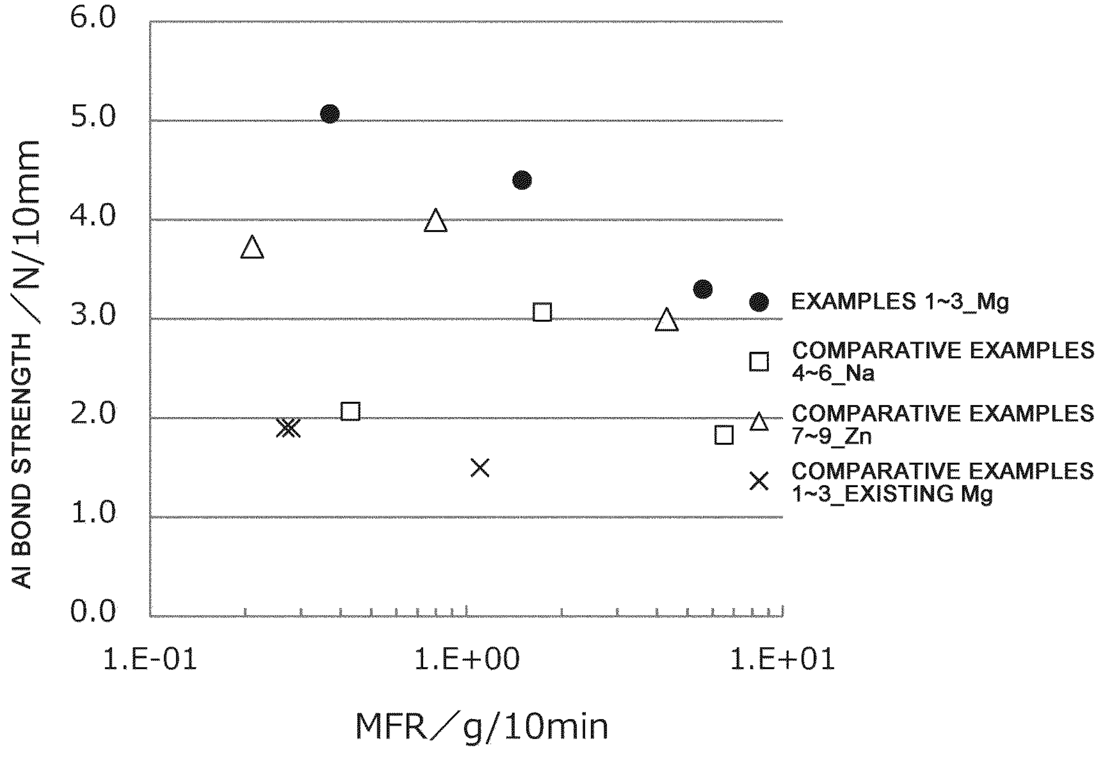
6.0
5.0
4.0
3.0
2.0
1.0
0.0
Al BOND STRENGTH ／N/10mm
1.E-01
1.E+00
1.E+01
MFR／g/10min
EXAMPLES 1~3_Mg
COMPARATIVE EXAMPLES 4~6_Na
COMPARATIVE EXAMPLES 7~9_Zn
COMPARATIVE EXAMPLES 1~3_EXISTING Mg

**INTERNATIONAL SEARCH REPORT**

International application No. **PCT/JP2023/011827**

**A. CLASSIFICATION OF SUBJECT MATTER**

***C08F 8/42***(2006.01)i
FI: C08F8/42

According to International Patent Classification (IPC) or to both national classification and IPC

**B. FIELDS SEARCHED**

Minimum documentation searched (classification system followed by classification symbols)

C08F8/42

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-195374 A (DU PONT MITSUI POLYCHEM CO LTD) 05 November 2015 (2015-11-05) claims, examples | 1-6 |
| A | JP 2006-103181 A (DU PONT MITSUI POLYCHEM CO LTD) 20 April 2006 (2006-04-20) claims, examples | 1-6 |
| A | JP 2021-533216 A (PERFORMANCE MATERIALS NA, INC.) 02 December 2021 (2021-12-02) claims, examples | 1-6 |
| A | JP 2022-515731 A (DOW GLOBAL TECHNOLOGIES LLC) 22 February 2022 (2022-02-22) claims, examples | 1-6 |
| A | JP 2016-079408 A (JAPAN POLYETHYLENE CORP) 16 May 2016 (2016-05-16) claims, examples | 1-6 |
| A | JP 2021-007744 A (JAPAN POLYETHYLENE CORP) 28 January 2021 (2021-01-28) claims, examples | 1-6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 June 2023** | **13 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/011827**

| Patent document cited in search report | Publication date (day/month/year) | Patent family member(s) | Publication date (day/month/year) |
|---|---|---|---|
| JP 2015-195374 A | 05 November 2015 | (Family: none) | |
| JP 2006-103181 A | 20 April 2006 | (Family: none) | |
| JP 2021-533216 A | 02 December 2021 | US 2021/0269566 A1<br>claims, examples<br>WO 2020/028159 A2<br>EP 3830187 A2<br>CN 112437791 A | |
| JP 2022-515731 A | 22 February 2022 | US 2022/0119630 A1<br>claims, examples<br>WO 2020/131902 A1<br>EP 3898829 A1<br>CN 113518801 A | |
| JP 2016-079408 A | 16 May 2016 | US 2017/0306134 A1<br>claims, examples<br>WO 2016/060218 A1<br>EP 3208285 A1<br>CN 107075005 A | |
| JP 2021-007744 A | 28 January 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3264272 A
- JP 2016079408 A
- JP 2020143276 A
- JP 2020158682 A
- JP 2015163691 A
- JP 2010150532 A
- WO 2010050256 A
- JP 2010202647 A
- JP 2010260913 A
- JP 2019156764 A

### Non-patent literature cited in the description

- **BROOKHART et al.** *Chem. Rev.*, 2000, vol. 100, 1169
- *Macromolecules*, 1984, vol. 17, 1756-1761
- *Macromolecules*, 1979, vol. 12, 41